(19) Europäisches Patentamt
European Patent Office
Office européen des brevets

(11) EP 0 722 960 B1

(12) EUROPÄISCHE PATENTSCHRIFT

(45) Veröffentlichungstag und Bekanntmachung des Hinweises auf die Patenterteilung:
**02.06.1999 Patentblatt 1999/22**

(51) Int Cl.[6]: **C08F 224/00**

(21) Anmeldenummer: **96100046.0**

(22) Anmeldetag: **03.01.1996**

# (54) Copolymere zur Herstellung von Gussglas oder für Formmassen zur Herstellung wärmeformstabiler Formkörper

Copolymers for preparing cast glass, or molding materials for preparing heat stable shaped articles

Copolymères pour la préparation de verres coulées ou matières de moulage pour la préparation d'objets formés stables à la chaleur

(84) Benannte Vertragsstaaten:
**AT BE CH DE DK ES FR GB GR IE IT LI NL PT SE**

(30) Priorität: **17.01.1995 DE 19501182**

(43) Veröffentlichungstag der Anmeldung:
**24.07.1996 Patentblatt 1996/30**

(73) Patentinhaber: **Agomer Gesellschaft mit beschränkter Haftung
63457 Hanau (DE)**

(72) Erfinder:
- **Schwind, Helmut, Dr.
D-63457 Hanau (DE)**
- **Hauch, Dirk
D-63517 Rodenbach (DE)**
- **Hasskerl, Thomas, Dr.
D-61476 Kronberg (DE)**
- **Dorn, Klaus, Dr.
D-63457 Hanau (DE)**
- **Höpp, Mathias, Dr.
D-63599 Biebergemünd (DE)**

(74) Vertreter: **Weber, Wolfgang
Degussa AG
Fachbereich Patente
Postfach 1345
63403 Hanau (DE)**

(56) Entgegenhaltungen:
**GB-A- 641 310** **US-A- 2 624 723**

- **DIE MAKROMOLECULARE CHEMIE, RAPID COMMUNICATIONS, Bd. 3, Nr. 5, 1982, Seiten 311-315, XP002029736 H. KOINUMA: "ALTERNATING COPOLYMERIZATION OF ALPHA-METHYLENE-GAMMA-BUTYROLACTO NE WITH STYRENE"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft Copolymere für Formmassen zur Herstellung wärmeformstabiler Formkörper, d. h. solche Formkörper mit erhöhter Wärmeformbeständigkeit.

Für Kunststoff-Formteile oder -platten mit hoher Transparenz und hervorragender optischer Güte werden häufig PMMA-Formmassen eingesetzt. Der Einsatzbereich von PMMA-Formmassen ist jedoch durch die Erweichung des PMMA oberhalb von ca. 115 °C beschränkt. Die "Gebrauchstemperatur" liegt dabei deutlich unterhalb der Erweichungstemperatur, so daß schon bei Temperaturen von > 95 °C von einer mangelnden Gebrauchsfähigkeit von PMMA auszugehen ist. Für den Einsatz bei höheren Temperaturen müssen deshalb andere Kunststoffe verwendet werden. Als transparente Kunststoffe kommen hierfür z. B. Polycarbonate mit einer Vicattemperatur von ca. 150 °C in Frage, wobei auch die Gebrauchstemperatur von Polycarbonat ebenfalls nicht an die Vicattemperatur des Materials von 150 °C heranreicht, sondern ca. 20 °C niedriger, also bei ca. 130 °C, liegt. Polycarbonat ist gegenüber PMMA sehr kratzempfindlich und bedeutend weniger witterungsstabil. Weitere transparente Kunststoffe mit höherer Wärmeformbeständigkeit sind Polymethacrylimide mit einer Vicattemperatur von bis zu 175 °C bei vollständiger Imidisierung. Polymethacrylimide erhält man durch Umsetzen von Methacrylpolymerisaten mit einem primären Amin in einem Reaktor. An den Seitenarmen des PMMA-Makromoleküls bilden sich die Imidstrukturen. Mit dem Imidisierungsgrad steigt die Vicattemperatur an. Polymethacrylimide haben eine höhere Wasseraufnahme als PMMA. Die Herstellung und die Eigenschaften dieses Polymers sind aus dem Patent DE-A-40 02 904 bekannt. Ein Verfahren zur Imidisierung von Polymerisaten der Acryl- und/oder Methacrylsäureester, neue imidisierte thermoplastische Polymerisate und eine Formmasse solcher Polymerisate sind Gegenstand der DE-A-26 52 118. Solche Polymethacrylimide sind mit Vicattemperaturen von 134 - 163 °C kommerziell erhältlich.

Zur Anhebung der Wärmeformbeständigkeit von PMMA ist auch die Copolymerisation von MMA mit geeigneten Monomeren bekannt. Als Beispiel kann die Copolymerisation von MMA mit Styrol und Maleinsäureanhydrid genannt werden. Im französischen Patent 1.476.215 (Röhm GmbH) werden Copolymere von MMA mit Styrol und Maleinsäureanhydrid beschrieben, deren Vicattemperatur zwischen 130 und 145 °C liegt. Die Witterungsbeständigkeit dieses Kunststoffs ist jedoch aufgrund des aromatischen Copolymers nicht so gut wie die Witterungsbeständigkeit des PMMA.

Im britischen Patent 641,310 wird die Substanzpolymerisation von α-Methylen-γ-butyrolacton und α-Methylen-γ-methyl-γ-butyrolacton beschrieben. Als Initiator für die radikalische Polymerisation werden Di-benzoyl-peroxid, Azo-bis-isobutyronitril oder Bestrahlung mit einer Quecksilberdampflampe angegeben. Im US-Patent 2,624,723 werden ebenfalls Homopolymere von α-Methylen-γ-butyrolacton und α-Methylen-γ-methyl-γ-butyrolacton beschrieben. Außerdem ist aus diesem Patent ein Copolymer von α-Methylen-γ-butyrolacton mit Acrylnitril bekannt. Die Polymere werden durch radikalische Polymerisation mit Peroxiden als Initiatoren oder durch Bestrahlung mit UV-Licht hergestellt. Diese Verbindungen zeichnen sich durch hohe Glasübergangstemperaturen aus. Sie sind hart und spröde und von leicht gelber Farbe. Darüber hinaus werden die genannten Polymere und Copolymere ohne Regler hergestellt und sind wegen ihres damit verbundenen relativ hohen Molekulargewichts nicht als Formmassen geeignet, ja selbst deren Eignung zur Herstellung von gegossenen Gläsern erscheint fraglich.

Das Homopolymere des α-Methylen-γ-butyrolactons und seine Glasübergangstemperatur kennt man auch aus Macromolecules 12, S. 546 - 551, wobei die relative hohe Tg von 195 °C und die niedrige Löslichkeit als Zeichen für eine beträchtliche Steifigkeit der Polymerkette angesehen werden.

Weiterhin zeigten Copolymerisationsstudien von α-Methylen-γ-butyrolacton und Methylmethacrylat (Polymer 20, S. 1215 - 1216), daß Ersteres über eine deutlich höhere Reaktivität verfügt als MMA.

In Dent Mater 8, S. 270 - 273 wird die Verwendung von exo-Methylenlactonen als Comonomere in Dentalharzen beschrieben. Es wurde gefunden, daß exo-Methylenlactone den Umsatz bei der Polymerisation von Dentalharzen durch Viskositätserniedrigung fördern und dadurch zu härteren Dentalfüllungen führen.

Im einzelnen ist es aus dieser Literaturstelle bekannt, aus α-Methylen-γ-butyrolacton, α-Methylen-γ-phenyl-γ-butyrolacton, 3-Methylen-1-oxaspiro[4.5]decan-2-on sowie Methylenphthalid Homopolymerisate herzustellen, wobei für die drei letztgenannten Exo-Methylenlactone auch Angaben zur Synthese gemacht werden, und es ist bekannt, α-Methylen-γ-butyrolacton in binärer Mischung mit Bis-GMA (2,2-bis-[4-(2-hydroxy-3-methacryloxypropoxy)phenylen] propan) oder in ternärer Mischung mit Bis-GMA und TEGDMA (Triethylenglycoldimethacrylat) unter Erhalt entsprechender Copolymerer zu polymerisieren.

Die gemäß Dent Mater 8, S. 270 - 273 hergestellten Homopolymerisate der Exomethylenlactone waren glasartige, spröde Materialien, während der Einsatz von α-Methylen-γ-butyrolacton mit den bifunktionellen als Vernetzer wirkenden Methacrylaten zu Copolymerisaten führte, die aufgrund eines höheren Umsatzes einen höheren Vernetzungsgrad und dadurch bedingt eine größere Härte aufweisen. Obwohl demnach also die Härte (durch Steigerung des Umsatzes) der Copolymerisate gesteigert wurde, weisen letztere dennoch eine unbefriedigende Wärmeformbeständigkeit auf.

Ferner ist aus Journal of Polymer Science: Polymer Chemistry Edition, Vol. 20, S. 2819 - 2828 (1982), die

radikalische Copolymerisation von α-Methylen-γ-butyrolacton mit Styrol in verschiedenen Verhältnissen bekannt. Die in diesem Zitat durchgeführten Untersuchungen dienten zur Bestimmung der Copolymerisationsparameter, mit dem Ergebnis, daß α-Methylen-γ-butyrolacton als zyklisches Analogon zum MMA sehr reaktiv ist und größere Q- und e-Werte besitzt als dieses. Außerdem wird erwähnt, daß das Homopolymere des α-Methylen-γ-butyrolactons thermisch stabiler ist als das Polymethylmethacrylat, wobei thermische Stabilität gemäß der Literaturstelle als Beständigkeit gegen Depolymerisation oder thermische Zersetzung verstanden wird. So zeigte die differentielle Thermoanalyse des α-Methylen-γ-butyrolacton Homopolymerisats eine Endotherme bei ca. 320 °C, während die für PMMA ca. 50 °C niedriger lag.

Letztlich kennt man aus Makromol. Chem. Rapid Commun. Vol. 3, S. 311 - 315 (1982), die alternierende ionische Polymerisation von α-Methylen-γ-butyrolacton mit Styrol in Gegenwart einer Lewis-Säure und aus Macromolecules 1986, 19, 558 - 565 die radikalische Copolymerisation von α-Methylen-δ-valerolacton mit Styrol, während Verfahren zur Herstellung des Homopolymeren des α-Methylen-γ-methyl-γ-butyrolactons mittels radikalischer, anionischer oder Gruppentransfer-Polymerisation aus Macromolecules 1984, 17, S. 2913 - 2916, zugänglich sind.

Zahlreiche Versuche, wärmeformbeständige transparente Kunststoffe von hoher optischer Güte herzustellen, zeigen den Bedarf an. Keines der genannten Produkte erreicht jedoch die Witterungsbeständigkeit und die leichte Verarbeitbarkeit des PMMA bei gleichzeitig verbesserter Wärmeformbeständigkeit und hoher Transparenz des Kunststofformteils.

Aufgabe der vorliegenden Erfindung war deshalb die Schaffung eines polymeren Ausgangsmaterials, das bezüglich den positiven Eigenschaften des PMMA's (Transparenz, Witterungsbeständigkeit, Verarbeitbarkeit) diesem zumindest ebenbürtig ist, es jedoch hinsichtlich der Wärmeformbeständigkeit überragt. Außerdem soll das neue Kunststoffmaterial zur Herstellung von Formkörpern im Gießverfahren oder zur Verarbeitung in Kunststofformmassen geeignet sein, aus denen sich im Spritzguß und/oder im Extrusionsverfahren Formkörper mit erhöhter Wärmeformbeständigkeit fertigen lassen.

Diese und weitere nicht einzeln aufgeführte Aufgaben werden durch Copolymere für Formmassen zur Herstellung von Formkörpern mit erhöhter Wärmeformbeständigkeit gelöst, die erhältlich sind durch Co-Polymerisation von

A) wenigstens einem exo-Methylen Lacton der allgemeinen Formel I

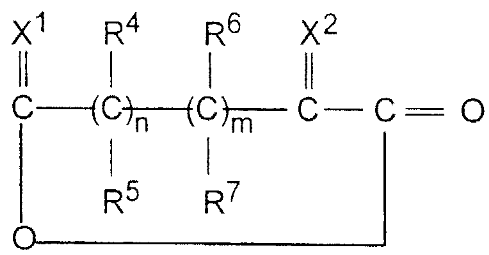

(I)

worin

n = 0 oder 1,
m = 0 oder 1 und die Summe n + m entweder 1 oder 2 ist; $X^1$ und $X^2$ jeweils für $=CH-R^1$ oder zwei einfach gebundene Substituenten $R^2$ und $R^3$ stehen,

wobei genau einer der Reste $X^1$ oder $X^2$ $=CH-R^1$ sein muß und für den Fall, daß $X^1$ $=CH-R^1$ ist, die Summe von n + m 1 sein muß;
wobei
$R^1$, $R^2$, $R^3$, $R^4$, $R^5$, $R^6$ und $R^7$ unabhängig voneinander gleich oder verschieden H, $C_1$-$C_7$-Alkyl und Halogen sein können,
wobei die $C_1$-$C_7$-Alkylreste verzweigt oder linear, N-, P-, S-heteroatomsubstituiert, O-Alkyl substituiert sein können, Halogensubstitution und/oder Carbonylgruppen tragen können, und
wobei zwei der Reste $R^1$ bis $R^7$ zu einem Ring mit 5 oder 6 Ringgliedern verbunden sein können;
mit
B) wenigstens einem vinylisch ungesättigten Monomeren oder einem oder mehreren exo-Methylen Lactonen der allgemeinen Formel I, von denen wenigstens eines von dem oder den unter A) eingesetzten exo-Methylen Lactonen der allgemeinen Formel I verschieden ist, wobei Copolymere aus α-Methylen-γ-butyrolacton mit Acrylnitril, Styrol, Methylmethacrylat oder bifunktionellen Methacrylaten sowie aus α-Methylen-δ-valerolacton und Styrol ausgenommen sind.

Die durch Umsetzung von Verbindungen A) mit den Verbindungen B) erhältlichen Copolymeren aus entweder wenigstens zwei Lactonen der allgemeinen Formel I oder wenigstens einem exo-Methylen-Lacton der Formel I und wenigstens einem vinylisch ungesättigten Monomeren weisen im allgemeinen eine hervorragende Wärmeformbeständigkeit auf, die ihren Einsatz in Formmassen zur Herstellung wärmeformstabiler Formkörper mit verbesserter Wärmeformbeständigkeit ermöglicht. So sind beispielsweise die Copolymeren aus wenigstens zwei exo-Methylen-Lactonen der Formel I bei gleich guter Transparenz wärmeformbeständiger als PMMA und Copolymere aus wenigstens einem exo-Methylen Lacton der Formel I mit einem vinylisch ungesättigten Monomer sind wärmeformbeständiger als die Homopolymeren nur aus den vinylisch ungesättigten Monomeren allein.

Werden (Meth-)acrylate als vinylische Monomere eingesetzt, so erhält man wärmeformbeständige und witterungsbeständige Kunststoffe mit den gleichen guten optischen Eigenschaften wie PMMA. Durch Regelung des Molekulargewichts dieser Polymere lassen sich leicht verarbeitbare Kunststofformmassen herstellen. Die Wärmeformbeständigkeit der Copolymere kann insbesondere durch Wahl des Comonomerverhältnisses und durch Wahl der Position und der Art der Substituenten im Lactonring gesteuert werden.

Zu den im Rahmen der Erfindung mit Vorteil als Komponente A) einsetzbaren exo-Methylen-Lactonen gehören u. a. α-Ethyliden-γ-butyrolactone oder α-Methylen-γ-butyrolactone der allgemeinen Formel II

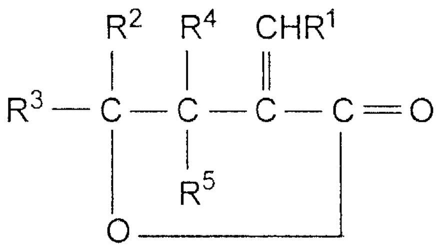

(II)

worin

$R^1$ für H oder $CH_3$ steht und
$R^2$, $R^3$, $R^4$ und $R^5$ die bei Formel I angegebene Bedeutung besitzen und insbesondere auch $R^2$ oder $R^3$ mit $R^4$ oder $R^5$ insgesamt einen 5- oder 6-gliedrigen Ring ausbilden können.

Zu den erfindungsgemäß in Frage kommenden Verbindungen der Formel II gehören vor allem solche, für die gilt:

| $R^1$ | $R^2$ | $R^3$ | $R^4$ | $R^5$ |
|---|---|---|---|---|
| H | H | H | H | H |
| H | $CH_3$ | H | H | H |
| H | H | $CH_3$ | H | H |
| H | H | H | $CH_3$ | H |
| H | H | H | H | $CH_3$ |
| H | $CH_3$ | $CH_3$ | H | H |
| H | $CH_3$ | H | $CH_3$ | H |
| H | $CH_3$ | H | H | $CH_3$ |
| H | H | $CH_3$ | $CH_3$ | H |
| H | H | $CH_3$ | H | $CH_3$ |
| H | H | H | $CH_3$ | $CH_3$ |
| H | $CH_3$ | $CH_3$ | $CH_3$ | H |
| H | $CH_3$ | H | $CH_3$ | $CH_3$ |
| H | H | $CH_3$ | $CH_3$ | $CH_3$ |
| H | $CH_3$ | $CH_3$ | $CH_3$ | $CH_3$ |
| H | $C_2H_5$ | H | H | H |
| H | H | $C_2H_5$ | H | H |

(fortgesetzt)

| $R^1$ | $R^2$ | $R^3$ | $R^4$ | $R^5$ |
|---|---|---|---|---|
| H | H | H | $C_2H_5$ | H |
| H | H | H | H | $C_2H_5$ |
| H | n-$C_3H_7$ | H | H | H |
| H | H | n-$C_3H_7$ | H | H |
| H | H | H | n-$C_3H_7$ | H |
| H | H | H | H | n-$C_3H_7$ |
| H | i-$C_3H_7$ | H | H | H |
| H | H | i-$C_3H_7$ | H | H |
| H | H | H | i-$C_3H_7$ | H |
| H | H | H | H | i-$C_3H_7$ |
| H | n-$C_4H_9$ | H | H | H |
| H | H | n-$C_4H_9$ | H | H |
| H | H | H | n-$C_4H_9$ | H |
| H | H | H | H | n-$C_4H_9$ |
| H | n-$C_5H_{11}$ | H | H | H |
| H | H | n-$C_5H_{11}$ | H | H |
| H | H | H | n-$C_5H_{11}$ | H |
| H | H | H | H | n-$C_5H_{11}$ |
| H | n-$C_6H_{13}$ | H | H | H |
| H | H | n-$C_6H_{13}$ | H | H |
| H | H | H | n-$C_6H_{13}$ | H |
| H | H | H | H | n-$C_6H_{13}$ |
| H | n-$C_7H_{15}$ | H | H | H |
| H | H | n-$C_7H_{15}$ | H | H |
| H | H | H | n-$C_7H_{15}$ | H |
| H | H | H | H | n-$C_7H_{15}$ |
| H | i-$C_4H_9$ | H | H | H |
| H | H | i-$C_4H_9$ | H | H |
| H | H | H | i-$C_4H_9$ | H |
| H | H | H | H | i-$C_4H_9$ |
| H | Isopentyl | H | H | H |
| H | H | Isopentyl | H | H |
| H | H | H | Isopentyl | H |
| H | H | H | H | Isopentyl |
| H | tert-$C_4H_9$ | H | H | H |
| H | H | tert-$C_4H_9$ | H | H |
| H | H | H | tert-$C_4H_9$ | H |
| H | H | H | H | tert-$C_4H_9$ |
| H | Neopentyl | H | H | H |
| H | H | Neopentyl | H | H |
| H | H | H | Neopentyl | H |
| H | H | H | H | Neopentyl |
| H | Neohexyl | H | H | H |
| H | H | Neohexyl | H | H |
| H | H | H | Neohexyl | H |
| H | H | H | H | Neohexyl |

(fortgesetzt)

| $R^1$ | $R^2$ | $R^3$ | $R^4$ | $R^5$ |
|---|---|---|---|---|
| $CH_3$ | H | H | H | H |
| $CH_3$ | $CH_3$ | H | H | H |
| $CH_3$ | H | $CH_3$ | H | H |
| $CH_3$ | H | H | $CH_3$ | H |
| $CH_3$ | H | H | H | $CH_3$ |
| $CH_3$ | $CH_3$ | $CH_3$ | H | H |
| $CH_3$ | $CH_3$ | H | $CH_3$ | H |
| $CH_3$ | $CH_3$ | H | H | $CH_3$ |
| $CH_3$ | H | $CH_3$ | $CH_3$ | H |
| $CH_3$ | H | $CH_3$ | H | $CH_3$ |
| $CH_3$ | H | H | $CH_3$ | $CH_3$ |
| $CH_3$ | $CH_3$ | $CH_3$ | $CH_3$ | H |
| $CH_3$ | $CH_3$ | H | $CH_3$ | $CH_3$ |
| $CH_3$ | H | $CH_3$ | $CH_3$ | $CH_3$ |
| $CH_3$ | $CH_3$ | $CH_3$ | $CH_3$ | $CH_3$ |
| $CH_3$ | $C_2H_5$ | H | H | H |
| $CH_3$ | H | $C_2H_5$ | H | H |
| $CH_3$ | H | H | $C_2H_5$ | H |
| $CH_3$ | H | H | H | $C_2H_5$ |
| $CH_3$ | $n-C_3H_7$ | H | H | H |
| $CH_3$ | H | $n-C_3H_7$ | H | H |
| $CH_3$ | H | H | $n-C_3H_7$ | H |
| $CH_3$ | H | H | H | $n-C_3H_7$ |
| $CH_3$ | $i-C_3H_7$ | H | H | H |
| $CH_3$ | H | $i-C_3H_7$ | H | H |
| $CH_3$ | H | H | $i-C_3H_7$ | H |
| $CH_3$ | H | H | H | $i-C_3H_7$ |
| $CH_3$ | $n-C_4H_9$ | H | H | H |
| $CH_3$ | H | $n-C_4H_9$ | H | H |
| $CH_3$ | H | H | $n-C_4H_9$ | H |
| $CH_3$ | H | H | H | $n-C_4H_9$ |
| $CH_3$ | $n-C_5H_{11}$ | H | H | H |
| $CH_3$ | H | $n-C_5H_{11}$ | H | H |
| $CH_3$ | H | H | $n-C_5H_{11}$ | H |
| $CH_3$ | H | H | H | $n-C_5H_{11}$ |
| $CH_3$ | $n-C_6H_{13}$ | H | H | H |
| $CH_3$ | H | $n-C_6H_{13}$ | H | H |
| $CH_3$ | H | H | $n-C_6H_{13}$ | H |
| $CH_3$ | H | H | H | $n-C_6H_{13}$ |
| $CH_3$ | $n-C_7H_{15}$ | H | H | H |
| $CH_3$ | H | $n-C_7H_{15}$ | H | H |
| $CH_3$ | H | H | $n-C_7H_{15}$ | H |
| $CH_3$ | H | H | H | $n-C_7H_{15}$ |
| $CH_3$ | $i-C_4H_9$ | H | H | H |
| $CH_3$ | H | $1-C_4H_9$ | H | H |

(fortgesetzt)

| $R^1$ | $R^2$ | $R^3$ | $R^4$ | $R^5$ |
|---|---|---|---|---|
| $CH_3$ | H | H | i-$C_4H_9$ | H |
| $CH_3$ | H | H | H | i-$C_4H_9$ |
| $CH_3$ | Isopentyl | H | H | H |
| $CH_3$ | H | Isopentyl | H | H |
| $CH_3$ | H | H | Isopentyl | H |
| $CH_3$ | H | H | H | Isopentyl |
| $CH_3$ | tert-$C_4H_9$ | H | H | H |
| $CH_3$ | H | tert-$C_4H_9$ | H | H |
| $CH_3$ | H | H | tert-$C_4H_9$ | H |
| $CH_3$ | H | H | H | tert-$C_4H_9$ |
| $CH_3$ | Neopentyl | H | H | H |
| $CH_3$ | H | Neopentyl | H | H |
| $CH_3$ | H | H | Neopentyl | H |
| $CH_3$ | H | H | H | Neopentyl |
| $CH_3$ | Neohexyl | H | H | H |
| $CH_3$ | H | Neohexyl | H | H |
| $CH_3$ | H | H | Neohexyl | H |
| $CH_3$ | H | H | H | Neohexyl |

Bevorzugte α-Methylen-γ-butyrolactone sind u. a.

α-Methylen-γ-butyrolacton,
α-Methylen-β-methyl-γ-butyrolacton,
α-Methylen-β-ethyl-γ-butyrolacton,
α-Methylen-β-propyl-γ-butyrolacton,
α-Methylen-β-isopropyl-γ-butyrolacton,
α-Methylen-β-n-butyl-γ-butyrolacton,
α-Methylen-β-isobutyl-γ-butyrolacton,
α-Methylen-β-tert-butyl-γ-butyrolacton,
α-Methylen-β-n-pentyl-γ-butyrolacton,
α-Methylen-β-isopentyl-γ-butyrolacton,
α-Methylen-β-neopentyl-γ-butyrolacton,
α-Methylen-β-n-hexyl-γ-butyrolacton,
α-Methylen-β-n-heptyl-γ-butyrolacton,
α-Methylen-γ-methyl-γ-butyrolacton,
α-Methylen-γ-ethyl-γ-butyrolacton,
α-Methylen-γ-propyl-γ-butyrolacton,
α-Methylen-γ-isopropyl-γ-butyrolacton,
α-Methylen-γ-n-butyl-γ-butyrolacton,
α-Methylen-γ-isobutyl-γ-butyrolacton,
α-Methylen-γ-tert-butyl-γ-butyrolacton,
α-Methylen-γ-n-pentyl-γ-butyrolacton,
α-Methylen-γ-isopentyl-γ-butyrolacton,
α-Methylen-γ-neopentyl-γ-butyrolacton,
α-Methylen-γ-n-hexyl-γ-butyrolacton,
α-Methylen-γ-n-heptyl-γ-butyrolacton,
α-Methylen-β,β-dimethyl-γ-butyrolacton,
α-Methylen-γ,γ-dimethyl-γ-butyrolacton,
α-Methylen-β-methyl-γ-methyl-γ-butyrolacton und
α-Methylen-β-methyl-γ,γ-dimethyl-γ-butyrolacton.

Weitere bevorzugte Verbindungen der Formel II sind α-Ethyliden-γ-butyrolacton und 4-Methylen-2-oxa-bicyclo-[3.3.0]-octan-3-on (MOBCO).

Ganz besonders bevorzugte Verbindungen der Formel II sind die α-Methylen-β-substituierten-γ-butyrolactone und hiervon wiederum das α-Methylen-β-methyl-γ-butyrolacton ($R^1 = R^2 = R^3 = H$, $R^4 = CH_3$, $R^5 = H$ oder $R^1 = R^2 = R^3 = H$ und $R^4 = H$ und $R^5 = CH_3$), die sich dadurch kennzeichnen, daß die Reste $R^4$ und/oder $R^5$ $C_1$-$C_7$-Alkyl sind. Von den $C_1$-$C_7$-Alkyl-Resten wiederum kommen vor allem Methyl, Ethyl, n-Propyl, i-Propyl, n-Butyl, iso-Butyl, tert-Butyl, n-Pentyl, neo-Pentyl, n-Hexyl oder n-Heptyl für die Erfindung in Frage, wobei vorteilhaft nur einer der Reste $R^4$ oder $R^5$ entsprechend substituiert ist, während der andere bevorzugt H ist.

In den aufgezählten Fällen werden schließlich beste Ergebnisse erzielt, wenn gleichzeitig die Reste $R^2$ und/oder $R^3$ in γ-Position des β-substituierten γ-Butyrolactons H, Methyl oder Ethyl sind.

Besonders günstig sind demnach Verbindungen wie

α-Methylen-β-methyl-γ-butyrolacton,
α-Methylen-β-ethyl-γ-butyrolacton,
α-Methylen-β-n-butyl-γ-butyrolacton,
α-Methylen-β-methyl-γ-methyl-γ-butyrolacton oder
α-Methylen-β-methyl-γ,γ-dimethyl-γ-butyrolacton
und hiervon wiederum das α-Methylen-β-methyl-γ-butyrolacton ($R^1 = R^2 = R^3 = H$, $R^4 = CH_3$, $R^5 = H$ oder $R^1 = R^2 = R^3 = H$ und $R^4 = H$ und $R^5 = CH_3$).

Ferner ist als Verbindung der allgemeinen Formel II auch 4-Methylen-2-oxa-bicyclo-[3.3.0]-octan-3-on ganz besonders vorteilig.

Die vorgenannten Verbindungen der allgemeinen Formel II sind entweder käuflich erhältlich oder werden nach literaturbekannten Verfahren synthetisiert. Hinweise zur Präparation von α-Methylen-γ-butyrolactonen finden sich beispielsweise in:

1) EP 295 553 B1; Verfahren zur Herstellung von 1,1-disubstituierten Ethylenverbindungen
2) A Method for the Synthesis of Unsaturated Carbonyl Compounds; G. M. Ksander, J. E. McMurry, M. Johnson; J. Org. Chem. Vol. 42, No. 7, 1180 - 1185, (1977)
3) Methods for the Synthesis of α-Methylene Lactones; P. A. Grieco; Synthesis, February 1975, S. 67 - 82 (Review)
4) Synthesis of α-Methylen-γ-butyrolactones by Rearrangement of Functionally Substituted Cyclopropanes; P. F. Hudrlik, L. R. Rudnick, S. H. Korzeniowski; J. Am. Chem. Soc. 95 (20), S. 6848 - 6850 (1973)
5) An Efficient Synthesis of γ-Methylene-γ-butyrolactone; R. A. Amos, J. A. Katzenellenbogen; J. Org. Chem. 43, No. 4, S. 560 - 564 (1978)
6) A New General Route to the Synthesis of Fused α-Methylene Lactones; P. A. Grieco, M. Miyashita; J. Org. Chem. Vol. 39, No. 1, S. 120 - 122 (1974)
7) M. K. Akkapeddi, Macromolecules 12, S. 546 (1979)
8) J. C. Sarma, R. P. Sharma, Heterocycles Vol. 24, S. 441 (1986)
9) R. B. Gammill, C. A. Wilson, T. A. Bryson, Synth. Commun. Vol. 5, S. 245 (1975).

Erfindungsgemäß sind als Komponente A)-Verbindungen auch γ-Methylen-γ-butyrolactone der allgemeinen Formel III bevorzugt einsetzbar,

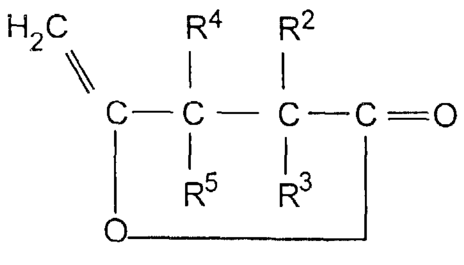

(III)

worin
$R^2$, $R^3$, $R^4$ und $R^5$ die bei Formel I angegebene Bedeutung besitzen.

Auch in den exo-Methylen Lactonen gemäß der Formel III kann es zwischen den Resten $R^2$ oder $R^3$ und $R^4$ oder $R^5$, also zwischen α-Substituenten und β-Substituenten, zur Ausbildung eines 5- oder 6-gliedrigen Ringsystems kommen.

Erfindungsgemäß bevorzugte γ-Methylen-γ-butyrolacton-Verbindungen sind u. a.

γ-Methylen-γ-butyrolacton,
γ-Methylen-α-methyl-γ-butyrolacton,
γ-Methylen-α,α-dimethyl-γ-butyrolacton,
γ-Methylen-β-methyl-γ-butyrolacton,
γ-Methylen-β,β-dimethyl-γ-butyrolacton,
γ-Methylen-α-ethyl-γ-butyrolacton,
γ-Methylen-α-propyl-γ-butyrolacton,
γ-Methylen-α-isopropyl-γ-butyrolacton,
γ-Methylen-α-butyl-γ-butyrolacton (n-, iso-, tert.-),
γ-Methylen-α-pentyl-γ-butyrolacton (n-, iso-, tert.-),
γ-Methylen-α-hexyl-γ-butyrolacton (n-, iso-, tert.-),
γ-Methylen-β-ethyl-γ-butyrolacton,
γ-Methylen-β-propyl-γ-butyrolacton,
γ-Methylen-β-isopropyl-γ-butyrolacton,
γ-Methylen-β-butyl-γ-butyrolacton (n-, iso-, tert.-),
γ-Methylen-β-pentyl-γ-butyrolacton (n-, iso-, tert.-),
γ-Methylen-β-hexyl-γ-butyrolacton (n-, iso-, tert.-),
γ-Methylen-α,β-dimethyl-γ-butyrolacton,
γ-Methylen-α,β-diethyl-γ-butyrolacton.

Die γ-Methylen-butyrolactone der allgemeinen Formel III sind nicht kommerziell erhältlich. Sie werden jedoch nach literaturbekannten Verfahren hergestellt. Einen Überblick geben "Synthese von 4-Penten-4-oliden (γ-Methylen-γ-butyrolactonen) über 4-Pentensäuren"; H. J. Günther, E. Guntrum, V. Jäger; Liebigs Ann. Chem. 1984, S. 15 - 30; spezielle Vorschriften für die Herstellung einzelner Vertreter findet man in "Synthesis of γ-Methylene Butyrolactones (4-Penten-4-olides)"; V. Jäger und H. J. Guntrum; Tetrahedron Letters, No. 29, S. 2543 - 2546 (1977); die anderen Verbindungen können analog erhalten werden.

Weiterhin bevorzugt werden als Verbindungen der Komponente A) auch α-Methylen-δ-valerolactone der allgemeinen Formel IV

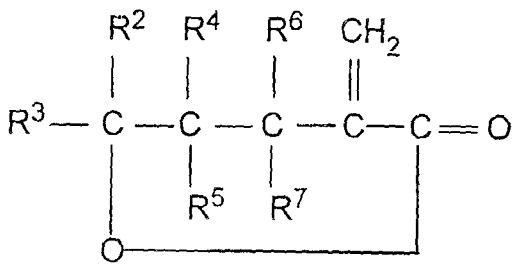

(IV)

eingesetzt,
worin $R^2$ - $R^7$ die bei Formel I angebene Bedeutung besitzen.

Zu den erfolgreich einsetzbaren α-Methylen-δ-valerolactonen zählen u. a. folgende Verbindungen:

α-Methylen-δ-valerolacton,
α-Methylen-β-methyl-δ-valerolacton,
α-Methylen-β-ethyl-δ-valerolacton,
α-Methylen-β-isopropyl-δ-valerolacton,
α-Methylen-β-butyl-δ-valerolacton (n-; iso-; tert.-),
α-Methylen-β-pentyl-δ-valerolacton (n-; iso-; tert.-),
α-Methylen-β-hexyl-δ-valerolacton (n-; iso-; tert.-),
α-Methylen-β-heptyl-δ-valerolacton (n-; iso-; tert.-),
α-Methylen-γ-methyl-δ-valerolacton,
α-Methylen-γ-ethyl-δ-valerolacton,
α-Methylen-γ-propyl-δ-valerolacton,
α-Methylen-γ-isopropyl-δ-valerolacton,
α-Methylen-γ-butyl-δ-valerolacton (n-; iso-; tert.-),

α-Methylen-γ-pentyl-δ-valerolacton (n-; iso-; tert.-),
α-Methylen-γ-hexyl-δ-valerolacton (n-; iso-; tert.-),
α-Methylen-γ-heptyl-δ-valerolacton (n-; iso-; tert.-),
α-Methylen-β-methyl-δ,δ-dimethyl-δ-valerolacton.

Auch bei den α-Methylen-δ-valerolactonen kann es zwischen zwei nicht am selben C-Atom angebundenen Resten $R^2$ bis $R^7$ zur Ausbildung eines 5- oder 6-gliedrigen Ringes kommen, der selbst wieder substituiert sein kann.
Die Verbindungen der Formel IV werden nach literaturbekannten Verfahren oder in Analogie zu literaturbekannten Methoden hergestellt. Beispiele für die Herstellung von α-Methylen-δ-valerolactonen finden sich in:

1) Regiospecific Synthesis of α-Methylene-Ketals and -Ketones, F. Huet, M. Pellet und J. M. Conia; Tetrahedron Letters, No. 39, S. 3505 - 3508, 1977

2) A Method for the Synthesis of Unsaturated Carbonyl Compounds; G. M. Ksander, J. E. McMurry, M. Johnson; J. Org. Chem. Vol. 42, No. 7, 1180 - 1185 (1977)

3) Methods for the Synthesis of α-Methylene Lactones, P. A. Grieco; Synthesis, February 1975, S. 67 - 82 (Review)

4) Synthese von α-Methylen-δ-lactonen; H. Marschall, F. Vogel, P. Weyerstahl; Chem. Ber. 107, S. 2852 - 2859 (1974).

Bei den genannten Verbindungen der Formel IV kann es prinzipiell zwischen zwei Resten $R^2$ bis $R^7$ zur Ausbildung eines 5- oder 6-gliedrigen Ringes kommen.
Hierbei unterscheiden sich die beiden, an der Ringbildung beteiligten Reste bevorzugt in ihrer relativen Stellung zur Carbonylgruppe des Lactonringes so, daß ihre Position jeweils benachbart ist. D. h., die Reste $R^2$ oder $R^3$ bilden bevorzugt mit $R^6$ oder $R^7$ einen Ring aus, während die Ringbildung zwischen $R^2$ oder $R^3$ und $R^4$ oder $R^5$ nicht so bevorzugt ist. Ebensowenig ist die Ausbildung eines Ringes zwischen zwei α-, β- oder γ-Resten von Vorteil.
Allgemein ist hinsichtlich möglicher Ring- oder Brückenausbildungen zwischen zweien der Reste $R^2$ bis $R^7$, wie sie für die Beschreibungen der Verbindungen gemäß den Formeln I bis IV verwendet werden, anzumerken, daß die Bezeichnungen, wie sie zur Verdeutlichung der für die einzelnen Reste R in Frage kommenden Strukturen eingesetzt werden, für den Fall einer Ring- oder Brückenausbildung, entsprechend den Regeln der chemischen Nomenklatur abzuändern sind. So versteht es sich, daß bei einer Brückenausbildung zwischen zwei Alkylgruppen in α- und γ-Stellung des Lactonrings eine Alkylengruppe resultiert.
Von den Verbindungen der Formeln I bis IV können im Rahmen der Erfindung entweder wenigstens zwei verschiedene Vertreter zum Erhalt eines Copolymers umgesetzt werden, erfindungsgemäße Verbindungen umfassen aber bevorzugt solche Copolymeren aus Lactonen der Formel I bis IV mit wenigstens einem vinylisch ungesättigten Monomeren.
Zu den vinylisch ungesättigten Monomeren der Komponente B) gehören vor allem die Ester der Acrylsäure und Methacrylsäure mit einwertigen Alkoholen, insbesondere solche mit 1 - 16 Kohlenstoffatomen, wie Methacrylsäuremethylester, Methacrylsäure-arylester, Methacrylsäure-stearylester, Methacrylsäure-isobutylester, Methacrylsäure-2-ethylhexylester, Methacrylsäure-laurylester, Methacrylsäure-arylester, Methacrylsäure-stearylester, Acrylsäuremethylester, Acrylsäure-ethylester, Acrylsäure-n-butylester, Acrylsäure-t-butylester, Acrylsäure-2-ethylhexylester, Acrylsäure-laurylester und Vinylaromaten, wie Styrol, Vinyltoluol, p-tert.-Butylstyrol oder α-Methylstyrol.
Als Bestandteile von Monomergemischen eignen sich auch Monomere mit einer weiteren funktionellen Gruppe, wie α-β-ungesättigte Mono- oder Dicarbonsäuren, beispielsweise Acrylsäure, Methacrylsäure oder Itaconsäure, Ester der Acrylsäure oder Methacrylsäure mit zweiwertigen Alkoholen, beispielsweise Hydroxyethylacrylat, Hydroxyethylmethacrylat, Hydroxypropylacrylat oder Hydroxypropylmethacrylat, Acrylamid oder Methacrylamid, Dimethylaminoethylacrylat oder Dimethylaminoethylmethacrylat. Weitere geeignete Bestandteile von Monomergemischen sind beispielsweise Glycidylacrylat oder Glycidylmethacrylat; insbesondere also all diejenigen Monomeren, die mit exo-Methylen-γ-butyrolactonen und/oder exo-Methylen-δ-valerolactonen copolymerisierbar sind und die sich bevorzugt in chemischen Formverfahren zu Formkörpern verarbeiten lassen.
Besonders bevorzugt sind solche Monomere, deren Homopolymere zu transparenten, glasartigen Kunststoffen verarbeitbar sind.
Hierzu gehören neben Styrol vor allem Acrylate und Methacrylate der allgemeinen Formel V

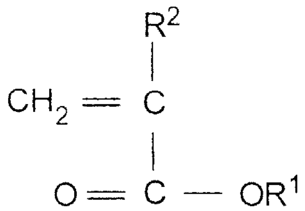

(V)

worin

$R^1$ $C_1$-$C_6$-Alkyl, bevorzugt $C_1$-$C_4$-Alkyl,
$R^2$ H oder $CH_3$ ist.

Zu beispielhaften Verbindungen gehören u. a. Methylacrylat, Ethylacrylat, Propylacrylat, n-Butylacrylat, Methylmethacrylat, Propylmethacrylat, n-Butylmethacrylat.

Methylmethacrylat und n-Butylmethacrylat sowie Methylacrylat, Ethylacrylat und n-Butylacrylat sind im Rahmen der Erfindung bevorzugt.
Ganz besonders bevorzugt ist neben Styrol Methylmethacrylat (MMA).

Obwohl sich grundsätzlich alle der unter die Formeln I bis IV fallenden Lactone für die Copolymerisation mit Acrylaten und/oder Methacrylaten eignen, sind α-Methylen-γ-butyrolactone mit aliphatischen Resten in β- und/oder γ-Stellung und α-Methylen-δ-valerolactone mit aliphatischen Resten in β- und/oder γ- und/oder δ-Stellung sowie die unsubstituierten Grundkörper der genannten α-Methylenlactone besonders geeignet. Die Copolymeren der (Meth-)acrylate mit α-Methylen-butyrolactonen werden wegen ihrer besseren thermischen Beständigkeit gegenüber den Copolymeren von (Meth-)acrylaten mit α-Methylen-valerolactonen bevorzugt. Copolymere von α-Methylen-γ-butyrolactonen mit Substituenten in β-Stellung haben dabei unerwartet hohe Glasübergangstemperaturen. Die Glasübergangstemperaturen der Homo- und Copolymeren nehmen mit der Länge der Seitenkette im Lactonring ab. Das Copolymere von MMA mit α-Methylen-β-methyl-γ-butyrolacton ist daher besonders wärmeformstabil und im Rahmen der Erfindung besonders bevorzugt. Vor allem überraschend und nicht ohne weiteres vorhersehbar war in diesem Zusammenhang, daß β-Alkyl-substituierte γ-Butyrolactone sowohl im Vergleich zu den nicht-zyklischen Analogen als auch zu den γ-substituierten zyklischen Analogen eine besondere Stellung einnehmen.

So steigt die Glasübergangstemperatur Tg beim Übergang von Polymethylacrylat zum Polymethylmethacrylat von ca. 10 °C auf ca. 105 °C, während Tg beim Übergang von α-Methylen-γ-butyrolacton zum α-Methylen-β-methyl-γ-butyrolacton von 188 °C auf > 340 °C ansteigt. Damit ist die Differenz, die durch Einführung einer Methylgruppe in das jeweilige Monomer beim entsprechenden Polymer erreicht wird, zwischen γ-Butyrolacton und azyklischem Analogen (MMA und MA) um ca. den Faktor 1,5 größer.

Schließlich ist auch der Unterschied der Tg des literaturbekannten α-Methylen-γ-methyl-γ-butyrolactons mit Tg = 229 °C und dem α-Methylen-β-methyl-γ-butyrolacton mit Tg > 340 °C unerwartet und bemerkenswert.

α-Methylen-γ-butyrolactone und α-Methylen-δ-valerolactone eignen sich besonders für die Copolymerisation mit weiteren vinylischen Monomeren, wobei wärmeformbeständige Kunststoffe entstehen. So sind die Copolymeren von Styrol mit α-Methylen-butyrolactonen wegen ihrer besseren thermischen Beständigkeit gegenüber den Copolymeren von Styrol mit α-Methylen-valerolactonen bevorzugt.

Die erfindungsgemäß unter anderem angestrebte Verbesserung der Wärmeformbeständigkeit der erfindungsgemäßen Copolymeren läßt sich gegenüber den entsprechenden Homopolymeren bereits durch relativ geringe Anteile an exo-Methylen-Lacton-Comonomeren erreichen.

Gleichzeitig ist aber auch ein relativ hoher exo-Methylen-Lacton-Anteil im erfindungsgemäßen Copolymeren mit verbesserter Wärmeformbeständigkeit in Bezug auf die Wärmeformstabilität nicht von Nachteil.
Daher kennzeichnen sich die Copolymere der Erfindung in bevorzugter Ausführungsform durch einen Gehalt an exo-Methylen-Lacton der Formel I von 1 - 70 Gew.% bezogen auf das Gesamtgewicht des Copolymeren. Weiterhin sind solche Copolymere vorteilhaft, die 5 - 50 Gew.%, bevorzugt 10 - 30 Gew.%, an exo-Methylen-Lacton gemäß einer der Formeln I bis IV enthalten.

Enthält das erfindungsgemäße Copolymer weniger als 1 Gew.% einer exo-Methylen-Lacton-Verbindung der Formeln I bis V, so ist der erfindungsgemäße Effekt der Wärmeformbeständigkeitsverbesserung nicht ausgeprägt genug. Eine Überschreitung der Obergrenze von 70 Gew.% ist grundsätzlich möglich, aber aufgrund der i. allg. höheren Kosten des exo-Methylen-Lactons nicht bevorzugt.

Wie bereits weiter oben ausgeführt wurde, sind Copolymere aus MMA und exo-Methylen-Lactonen der Formeln I bis IV für die Erfindung von besonders großem Nutzen.
Erfindungsgemäß ist daher auch ein Copolymer von Vorteil, bei dem die Komponente B) Methylmethacrylat ist, der

Gehalt an Methylmethacrylat 50 Gew.% oder größer ist, die Glasübergangstemperatur größer als 120 °C ist und das Copolymer transparent und klar ist.

Die Polymerisation zum Erhalt der Copolymerisate von exo-Methylen-Lactonen kann nach den verschiedenen Verfahren der radikalischen Polymerisation durchgeführt werden. Im Rahmen der Erfindung wurde die Substanzpolymerisation und die Suspensionspolymerisation intensiv untersucht. Die Substanzpolymerisation wird z. B. in Houben-Weyl Bd. E20, Teil 2 (1987), Seite 1145ff, beschrieben. Die Suspensionspolymerisation wird in Houben-Weyl, Bd. E20, Teil 2 (1987), Seite 1149f, beschrieben.

Neben der Zusammensetzung des Copolymeren kann auch sein Molekulargewicht eine gewisse Rolle für die spätere Verarbeitung der Copolymeren zur Herstellung wärmeformbeständiger Formkörper spielen. So lassen sich mögliche spätere Verarbeitungsvarianten durch gezielte Einstellung des Molekulargewichts unterstützen.

Einerseits ist es dabei im Rahmen der Erfindung möglich, beim eigentlichen Copolymerisationsprozeß solch hohe Molekulargewichte einzustellen, daß eine anschließende thermische Formung unmöglich wird. Andererseits ist durch Wahl eines niedrigeren Molekulargewichtes der Erhalt eines Copolymerisats möglich, welches in weiteren thermischen Verfahren anschließend geformt werden kann.

Wird nämlich eine Verarbeitung der erfindungsgemäßen Comonomeren im Extrusions- oder Spritzgießverfahren gewünscht, dann wird für die erfindungsgemäßen Copolymeren ein niedrigeres Molekulargewicht $\overline{M}_w$ zwischen 50.000 und 250.000, vorteilhaft zwischen 80.000 und 200.000, bevorzugt. Prinzipiell sind derlei Copolymerisate durch Erhitzen in eine thermoplastisch verarbeitbare Schmelze bringbar.

Das Molekulargewicht der Copolymerisate läßt sich dabei auf dem Fachmann bekannte und geläufige Weise durch Verwendung von Reglern einstellen und falls erforderlich entsprechend den Erfordernissen beschränken.

Grundsätzlich können die Copolymeren an alle dem Fachmann geläufigen Formgebungsprozesse für die Herstellung von Formkörpern mit verbesserter Wärmeformbeständigkeit angepaßt werden.

Copolymere gemäß der Erfindung lassen sich günstigerweise zu Kunststofformmassen in Granulatform verarbeiten. Diese Formmassegranulate sind dann für die weitere Verarbeitung durch Extrusion oder Spritzgießen besonders geeignet. Die Herstellung der Formmassegranulate erfolgt durch Extrusion und Granulation der in Platten- oder Perlform angefallenen Kunststoffe, wobei niedermolekulare Begleitstoffe von den Polymeren durch Entgasung im Extruder abgetrennt werden. Ein derartiges Verfahren wird z. B. im Handbuch der Kunststoff-Extrusionstechnik, Bd. I und II (Hrsg.: F. Heusen, W. Kappe, H. Potente; Hauser Verlag 1986 u. 1989), beschrieben.

Hat man beim eigentlichen Polymerisationsvorgang ein solches hohes Molekulargewicht eingestellt, daß eine anschließende thermische Weiterverarbeitung nur schwer möglich ist, so ist erfindungsgemäß dafür Sorge zu tragen, daß die Formung bereits während des Polymerisationsvorgangs, bevorzugt in geeigneter Form, vonstatten geht. In einer bevorzugten erfindungsgemäßen Ausführungsform wird das Copolymere der Erfindung daher zu Gußglas verarbeitet. Dabei wird das Gußglas nicht aus Formmassen sondern durch Polymerisieren eines Sirups, welcher die zur Polymerisation geeigneten Komponenten aufweist, in der Form dargestellt. Dabei können die Sirupe vor allem auch bestimmte Anteile an sogenannten Prepolymeren aufweisen.

Gegenstand der Erfindung sind demnach auch besonders wärmeformbeständige Gußglaskörper, erhalten nach dem Kammerofenverfahren durch Substanzpolymerisation eines Sirups aufweisend

A) wenigstens einem exo-Methylen Lacton der allgemeinen Formel I

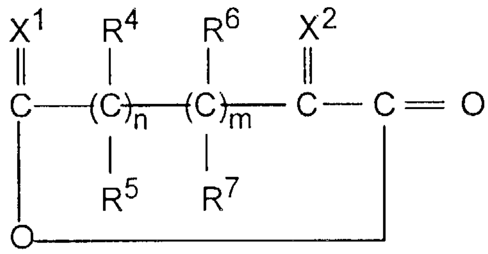

(I)

worin

n = 0 oder 1,
m = 0 oder 1 und die Summe n + m entweder 1 oder 2 ist; $X^1$ und $X^2$ jeweils für =CH-$R^1$ oder zwei einfach gebundene Substituenten $R^2$ und $R^3$ stehen,

wobei genau einer der Reste $X^1$ oder $X^2$ =CH-$R^1$ sein muß, und für den Fall, daß $X^1$ =CH-$R^1$ ist, die Summe von n + m 1 sein muß,

wobei
$R^1$, $R^2$, $R^3$, $R^4$, $R^5$, $R^6$ und $R^7$ unabhängig voneinander gleich oder verschieden H, $C_1$-$C_7$-Alkyl und Halogen sein können, wobei die $C_1$-$C_7$-Alkylreste verzweigt oder linear, N, P, S heteroatomsubstituiert, O-Alkyl substituiert sein können, Halogensubstitution und/oder Carbonylgruppen tragen können, und
wobei zwei der Reste $R^1$ bis $R^7$ zu einem Ring mit 5 oder 6 Ringgliedern verbunden sein können;
mit
B) wenigstens einem vinylisch ungesättigten Monomeren oder einem oder mehreren exo-Methylen Lactonen der allgemeinen Formel I, von denen wenigstens eines von dem oder den unter A) eingesetzten exo-Methylen Lactonen der allgemeinen Formel I verschieden ist.

In bevorzugter Ausführungsform kennzeichnen sich die Gußglaskörper der Erfindung durch ein mittleres Molekulargewicht $\overline{M}_w$ des Copolymerisats aus den Komponenten A) und B) von 500.000 - 5.000.000.
Im folgenden wird die Erfindung anhand von Beispielen eingehender erläutert.
Liste der in den Beispielen und Vergleichsbeispielen verwendeten Abkürzungen für Substanzen:
Monomere:

| | |
|---|---|
| α-MγBL | α-Methylen-γ-butyrolacton |
| γ-MγBL | γ-Methylen-γ-butyrolacton |
| α-MβMγBL | α-Methylen-β-methyl-γ-butyrolacton |
| α-MβEγBL | α-Methylen-β-ethyl-γ-butyrolacton |
| α-MβBγBL | α-Methylen-β-butyl-γ-butyrolacton |
| α-MβMγMγBL | α-Metliylen-β-methyl-γ-methyl-γ-butyrolacton |
| α-MββMγBL | α-Methylen-ββ-dimethyl-γ-butyrolacton |
| α-MβMγγMγBL | α-Methylen-β-methyl-γγ-dimethyl-γ-butyrolacton |
| α-MγMγBL | α-Methylen-γ-methyl-γ-butyrolacton |
| α-MγBγBL | α-Methylen-γ-butyl-γ-butyrolacton |
| α-MγHγBL | α-Methylen-γ-heptyl-γ-butyrolaton |
| α-MγγMγBL | α-Methylen-γ-dimethyl-γ-butyrolacton |
| α-MδVL | α-Methylen-δ-valerolacton |
| α-MγγMδVL | α-Methylen-γ-dimethyl-δ-valerolacton |
| α-MβMδδMδVL | α-Methylen-β-metliyl-δδ-dimethyl-δ-valerolacton |
| MOBCO | 4-Methylen-2-oxabicyclo[3.3.0]octan-3-on |

Regler:

TGEH Thioglykolsäure-2-ethylhexylester
t-DDM tert.-Dodecylmercaptan
GDMA Glykoldimercaptoacetat

Initiatoren:

LPO Dilauroylperoxid
BPO Dibenzoylperoxid
t-BPEH tert.-Butylper-2-ethylhexanoat
ADMV 2,2'-Azobis(2,4-dimethylvaleronitril)
AIBN 2,2'-Azobis-(isobutyronitril)
DTBP Di-tert.-butylperoxid

Die Polymerisierbarkeit von exo-Methylen-Lactonen wurde in zahlreichen erfindungsgemäßen und vergleichenden Beispielen überprüft. In den meisten Fällen (Beispiele 1 - 12, 14 - 44) wurde die Substanzpolymerisation nach dem Kammerverfahren durchgeführt (siehe Houben-Weyl Bd. E20, Teil 2 (1987), Seite 1145ff). In weiteren Beispielen wurden die Polymerisierbarkeit in Lösung (Beispiel 13) und die Suspensions-(Perl-)-Polymerisation (2a, 13b, 17a)

geprüft. Soweit nicht näher angegeben, beziehen sich Prozente und Teile immer auf Gewichtsprozente und Gewichtsteile.

Die in den nachfolgenden Textbeispielen und Tabellen, welche die Bedingungen für die Homo- und Copolymerisation zusammenfassend darstellen, zur Charakterisierung der Polymeren verwendeten Eigenschaften wie Glasübergangstemperatur, Gewichtsverlust (30 min bei 300 °C) sowie optische Beurteilung wurden mittels folgender analytischer Methoden ermittelt:

- Glasübergangstemperatur:

| | |
|---|---|
| Gerät | Mettler TA 3000 |
| Verfahren | Dynamische Differential Kalorimetrie |
| Methode | mit einer Heizrate von 10 °C/min von 0 °C bis zur vereinbarten Endtemperatur aufheizen |

- Gewichtsverlust oder thermische Zersetzung:

| | |
|---|---|
| Gerät | Netzsch TG 209 |
| Verfahren | Thermogravimetrie |
| Methode | Probe innerhalb 30 min von Raumtemperatur auf 300 °C aufheizen und noch 30 min bei 300 °C halten; Gewichtsverlust bestimmen |

TG(A) = Gewichtsverlust während des Aufheizens auf 300 °C (in Prozent bezogen auf das ursprüngliche Gewicht des Prüfstücks)
TG(B) = Gewichtsverlust nach weiteren 30 min bei 300 °C (in Prozent bezogen auf das ursprüngliche Gewicht des Prüfstücks)

- Optische Beurteilung:
  visuelle Beurteilung mit Vergleichsprobe von bekannten Hazewert:
  * transparent = Haze < 2
  * trüb = Haze > 2
- Brechungsindex : nach DIN 53 491
- Vicat-Temperatur : nach DIN 53 460
- E-Modul : nach DIN 53 457
- Zugfestigkeit : nach DIN 53 455
- Kugeldruckhärte : nach DIN ISO 2039 T1
- Schlagzähigkeit : nach DIN 53 453

α-Methylen-γ-butyl-γ-butyrolacton (α-MγBγBL)

Vergleichsbeispiel 1:

Eine Lösung aus 1000 Teilen α-MγBγBL, 2.5 Teilen Thioglykolsäure-2-ethylhexylester (TGEH), 1.5 Teilen t-Dodecylmercaptan, 2.5 Teilen Dilauroylperoxid und 0.3 Teilen Ditertiärbutylperoxid wurde nach dem Kammerverfahren zwischen Glasplatten bei 60 °C 4 Stunden, bei 90 °C 1 Stunde und bei 140 °C eine Stunde polymerisiert.
Das resultierende Polymer hat folgende Kenndaten:

| | |
|---|---|
| Thermische Zersetzung (30 min, 300 °C) | 2.6 % |
| Glasübergangstemperatur | 146 °C |
| mittleres Molgewicht | 180000 g/mol |
| Brechungsindex (20 °C) | 1.500 |

(fortgesetzt)

| | |
|---|---|
| Dichte | 1.126 g/ccm |

Beispiel 2:

Eine Lösung aus 500 Teilen α-MγBγBL, 500 Teilen Methylmethacrylat und 1 Teil t-Butylper-2-ethylhexanoat wurde nach dem Kammerverfahren zwischen Glasplatten bei 80 °C 8 Stunden polymerisiert.
Das resultierende Polymer hat eine Glasübergangstemperatur von 120 °C.

Beispiel 2a:

Eine Lösung aus 400 Teilen α-MγBγBL, 600 Teilen Methylmethacrylat, 3.5 Teilen Thioglykolsäure-2-ethylhexylester, 1.5 Teilen t-Dodecylmercaptan, 0.5 Teilen Stearinsäure und 2.5 Teilen Dilauroylperoxid wurde in 2000 Teilen Wasser und 2.6 Teilen Degaoas® 8105 S suspendiert und nach dem Suspensionsverfahren 2 Stunden bei 80 °C und eine Stunde bei 94 °C polymerisiert.

Beispiel 3:

Eine Lösung aus 850 Teilen α-MγBγBL, 150 Teilen n-Butylmethacrylat und 1 Teil t-Butylper-2-ethylhexanoat wurde nach dem Kammerverfahren zwischen Glasplatten bei 80 °C 4.5 Stunden polymerisiert.
Das resultierende Polymer hat eine Glasübergangstemperatur von 110 °C.

α-Methylen-γ-methyl-γ-butyrolacton (α-MγMγBL)

Vergleichsbeispiel 4:

Eine Lösung aus 1000 Teilen α-MγMγBL und 1 Teil t-Butylper-2-ethylhexanoat wurde nach dem Kammerverfahren zwischen Glasplatten bei 80 °C 9.5 Stunden polymerisiert.
Das resultierende Polymer hat eine Glasübergangstemperatur von 229 °C und 3.5 % Gewichtsverlust nach 30 min bei 300 °C.

Beispiel 5:

Eine Lösung aus 500 Teilen α-MγMγBL, 500 Teilen Methylmethacrylat und 1 Teil t-Butylper-2-ethylhexanoat wurde bei 90 °C 5 Stunden nach dem Kammerverfahren zwischen Glasplatten polymerisiert.
Das resultierende Polymer hat eine Glasübergangstemperatur von 167 °C und einen Gewichtsverlust von 4.4 % nach 30 min bei 300 °C.

Beispiel 6:

Eine Lösung aus 850 Teilen α-MγMγBL, 150 Teilen n-Butylacrylat und 1 Teil t-Butylper-2-ethylhexanoat wurde bei 80 °C 4 Stunden nach dem Kammerverfahren zwischen Glasplatten polymerisiert.
Das resultierende Polymer hat eine Glasübergangstemperatur von 211 °C.

Beispiel 7:

Eine Lösung aus 850 Teilen α-MγMγBL, 150 Teilen n-Butylmethacrylat und 1 Teil t-Butylper-2-ethylhexanoat wurde bei 80 °C 5 Stunden nach dem Kammerverfahren zwischen Glasplatten polymerisiert.
Das resultierende Polymer hat eine Glasübergangstemperatur von 200 °C.

Beispiel 8:

Eine Lösung aus 500 Teilen α-MγMγBL, 500 Teilen Styrol und 1 Teil Dilauroylperoxid wurde bei 70 °C 6 Stunden nach dem Kammerverfahren zwischen Glasplatten polymerisiert.
Das resultierende Polymer hat eine Glasübergangstemperatur von 160 °C.

α-Methylen-γ-heptyl-γ-butyrolacton (α-MγHγBL)

Vergleichsbeispiel 9:

Eine Lösung aus 1000 Teilen α-MγHγBL und 6 Teilen 2,2'-Azobis(2,4-dimethylvaleronitril) wurde 3.5 Stunden bei 90 °C und 2 Stunden bei 100 °C nach dem Kammerverfahren zwischen Glasplatten polymerisiert.
Das resultierende Polymer hat eine Glasübergangstemperatur von 105 °C.

Beispiel 10:

Eine Lösung aus 700 Teilen α-MγHγBL, 300 Teilen α-MγBL, 2.9 Teilen Glykoldimercaptoacetat und 3 Teilen 2,2'-Azobis(2,4-dimethylvaleronitril) wurde nach dem Kammerverfahren 3 Stunden bei 100 °C zwischen Glasplatten polymerisiert.
Das resultierende Polymer hat eine Glasübergangstemperatur von 126 °C.

α-Methylen-γ-butyrolacton (α-MγBL)

Vergleichsbeispiel 11:

Eine Lösung aus 1000 Teilen α-MγBL, 3 Teilen Thioglykolsäure-2-ethylhexylester und 0.8 Teilen t-Butylper-2-ethylhexanoat wurde nach dem Kammerverfahren zwischen Glasplatten eine Stunde bei 70 °C und 2 Stunden bei 120 °C polymerisiert.
Das resultierende Polymer hat folgende Kenndaten:

| | |
|---|---|
| Glasübergangstemperatur | 188 °C |
| Vicat | 182 °C |
| E-Modul | 6600 $N/mm^2$ |
| Kugeldruckhärte | 490 $N/mm^2$ |
| TG(B) | 0.4 % |
| Brechungsindex | 1.540 |

Vergleichsbeispiel 12:

Eine Lösung aus 650 Teilen α-MγBL, 350 Teilen Styrol, 3 Teilen Thioglykolsäure-2-ethylhexylester und 1.8 Teilen t-Butylper-2-ethylhexanoat wurden 3 Stunden bei 70 °C und 2 Stunden bei 150 °C nach dem Kammerverfahren zwischen Glasplatten polymerisiert.
Das resultierende Polymer hat folgende Kenndaten:

| | |
|---|---|
| Glasübergangstemperatur | 166 °C |
| Vicat | 152 °C |
| E-Modul | 4100 $N/mm^2$ |
| Kugeldruckhärte | 320 $N/mm^2$ |
| TG(B) | 1.8 % |

Vergleichsbeispiel 13:

Eine Lösung aus 500 Teilen α-MBL, 500 Teilen Methylmethacrylat, 2 Teilen Thioglykolsäure-2-ethylhexylester und einem Teil 1,1'-Azobis(cyanocyclohexan) wurden über 3 Stunden in 600 Teile Dimethylformamid dosiert, eine Stunde bei 85 °C nachgeheizt und eine Stunde bei 115 °C gehalten.
Das resultierende Polymer hat eine Glasübergangstemperatur von 135 °C.

Vergleichsbeispiel 13a:

Eine Lösung aus 800 Teilen α-MγBL, 200 Teilen Methylmethacrylat, 3 Teilen Thioglykolsäure-2-ethylhexylester und 0.8 Teile tert.-Butylper-2-ethylhexanoat wurde nach dem Kammerverfahren 1 Stunde bei 70 °C und 2 Stunden bei 120 °C polymerisiert.

Das resultierende Polymer hat folgende Kenndaten:

| | |
|---|---|
| Vicat | 162 °C |
| E-Modul | 6000 N/mm$^2$ |
| Kugeldruck | 421 N/mm$^2$ |
| TG(B) | 1.0 % |
| Brechungsindex | 1.532 |

Beispiel 13b:

Eine Lösung aus 200 Teilen α-MγBL, 800 Teilen Methylmethacrylat, 3.5 Teile Thioglykolsäure-2-ethylhexylester und 0.5 Teile 2,2'-Azobis(isobutyronitril) wurde nach dem Kammerverfahren 3.5 Stunden bei 75 °C und 3 Stunden bei 120 °C polymerisiert.
Das resultierende Polymer hat folgende Kenndaten:

| | |
|---|---|
| Vicat | 118 °C |
| Schlagzähigkeit | 15.6 kJ/m$^2$ |
| TG(B) | 10.8 % |
| Glasübergangstemperatur | 133 °C |

Beispiel 14:

Eine Lösung aus 500 Teilen α-MγBL, 500 Teilen α-MγBγBL, 2.9 Teilen Glykoldimercaptoacetat und 0.3 Teilen 2,2'-Azobis(2,4-dimethylvaleronitril) wurde 40 min bei 100 °C und 2.5 Stunden bei 130 °C nach dem Kammerverfahren zwischen Glasplatten polymerisiert.
Das resultierende Polymer hat eine Glasübergangstemperatur von 172 °C.

γ-Methylen-γ-butyrolacton (γ-MγBL)

Vergleichsbeispiel 15:

Eine Lösung aus 1000 Teilen γ-MγBL und 20 Teile 2,2'-Azobis(isobutyronitril) wurde nach dem Kammerverfahren zwischen Glasplatten 14 Stunden bei 80 °C polymerisiert.
Das resultierende Polymer hat eine Glasübergangstemperatur von 165 °C und einen Gewichtsverlust von 9.3 % nach 30 min bei 300 °C.

α-Methylen-β-methyl-γ-butyrolacton (α-MβMγBL)

Vergleichsbeispiel 16:

Eine Lösung aus 1000 Teilen α-MβMγBL und 1 Teil t-Butylper-2-ethylhexanoat wurde nach dem Kammerverfahren zwischen Glasplatten 5 Stunden bei 80 °C polymerisiert.
Das resultierende Polymer hat keinen Glasübergang, bei 300 °C tritt Zersetzung ein, und einen Gewichtsverlust von 3.5 % nach 30 min bei 300 °C.

Beispiel 17:

Eine Lösung aus 200 Teilen α-MβMγBL, 800 Teilen Methylmethacrylat, 2.5 Teilen Thioglykolsäure-2-ethylhexylester, 2 Teilen t-Dodecylmercaptan, 2 Teilen 2,2'-Azobis(isobutyronitril) und 0.3 Teilen Ditertiärbutylperoxid wurde nach dem Kammerverfahren zwischen Glasplatten 3 Stunden bei 80 °C, eine Stunde bei 90 °C und eine Stunde bei 140 °C polymerisiert.
Das resultierende Polymer hat folgende Kenndaten:

| | |
|---|---|
| Glasübergangstemperatur | 159 °C |
| Vicat | 141 °C |
| E-Modul (DMTA) | 3700 N/mm$^2$ |

(fortgesetzt)

| | |
|---|---|
| Kugeldruckhärte | 213 N/mm$^2$ |
| TG(B) | 9.8 % |
| Brechungsindex | 1.497 |

Beispiel 17a:

Eine Lösung aus 200 Teilen α-MβMγBL, 800 Teilen Methylmethacrylat, 3.5 Teilen Thioglykolsäure-2-ethylhexylester, 1.5 Teilen t-Dodecylmercaptan, 0.5 Teilen Stearinsäure und 10 Teilen Dilauroylperoxid wurde in 2000 Teilen Wasser und 1.2 Teilen Dicktol 60/7 suspendiert und nach dem Suspensionsverfahren 2 Stunden bei 80 °C und eine Stunde bei 94 °C polymerisiert.

Beispiel 18:

Eine Lösung aus 500 Teilen α-MβMγBL, 500 Teilen n-Butylmethacrylat und 1 Teil 2,2'-Azobis(isobutyronitril) wurde bei 80 °C 7 Stunden nach dem Kammerverfahren zwischen Glasplatten polymerisiert.
Das resultierende Polymer hat eine Glasübergangstemperatur von 186 °C.

<u>α-Methylen-β-butyl-γ-butyrolacton (α-MβBγBL)</u>

Vergleichsbeispiel 19:

Eine Lösung aus 1000 Teilen α-MβBγBL und 10 Teilen 2,2'-Azobis(isobutyronitril) wurde nach dem Kammerverfahren zwischen Glasplatten bei 80 °C 3 Stunden polymerisiert.
Das resultierende Polymer hat eine Glasübergangstemperatur von 220 °C und einen Gewichtsverlust von 24.0 % nach 30 min bei 300 °C.

Beispiel 20:

Eine Lösung aus 500 Teilen α-MβBγBL, 500 Teilen Methylmethacrylat und 5 Teilen 2,2'-Azobis(isobutyronitril) wurde nach dem Kammerverfahren zwischen Glasplatten bei 80 °C 3 Stunden polymerisiert.
Das resultierende Polymer hat eine Glasübergangstemperatur von 162 °C und einen Gewichtsverlust von 30.5 % nach 30 min bei 300 °C.

Beispiel 21:

Eine Lösung aus 500 Teilen α-MβBγBL, 500 Teilen Styrol und 3 Teile 2,2'-Azobis(isobutyronitril) wurde 12 Stunden bei 80 °C nach dem Kammerverfahren zwischen Glasplatten polymerisiert.
Das resultierende Polymer hat eine Glasübergangstemperatur von 150 °C.

<u>α-Methylen-β-dimethyl-γ-butyrolacton (α-MββMγBL)</u>

Beispiel 22:

Eine Lösung aus 500 Teilen α-MββMγBL, 500 Teilen Styrol und 5 Teilen Dibenzoylperoxid wurde 7 Stunden bei 85 °C und eine Stunde bei 95 °C nach dem Kammerverfahren zwischen Glasplatten polymerisiert.
Das resultierende Polymer hat eine Glasübergangstemperatur von 160 °C.

<u>α-Methylen-γ-dimethyl-γ-butyrolacton (α-MγγMγBL)</u>

Vergleichsbeispiel 23:

Eine Lösung aus 1000 Teilen α-MγγMγBL und 6 Teilen 2,2'-Azobis(isobutyronitril) wurde 6 Stunden bei 80 °C nach dem Kammerverfahren zwischen Glasplatten polymerisiert.
Das resultierende Polymer hat eine Glasübergangstemperatur von 211 °C und 12.1 % Gewichtsverlust nach 30 min bei 300 °C.

Beispiel 24:

Eine Lösung aus 500 Teilen α-MγγMγBL, 500 Teilen Methylmethacrylat, 2.5 Teilen Thioglykolsäure-2-ethylhexylester, 1.5 Teilen t-Dodecylmercaptan und 6 Teilen 2,2'-Azobis(isobutyronitril) wurde nach dem Kammerverfahren zwischen Glasplatten bei 80 °C 6 Stunden polymerisiert.
Das resultierende Polymer hat eine Glasübergangstemperatur von 160 °C und 11.1 % Gewichtsverlust nach 30 min bei 300 °C.

Beispiel 25:

Eine Lösung aus 500 Teilen α-MγγMγBL, 500 Teilen Styrol, 2.5 Teilen Thioglykolsäure-2-ethylhexylester, 1.5 Teilen t-Dodecylmercaptan und 10 Teilen 2,2'-Azobis(isobutyronitril) wurde 7 Stunden bei 80 °C nach dem Kammerverfahren zwischen Glasplatten polymerisiert.
Das resultierende Polymer hat eine Glasübergangstemperatur von 155 °C.

α-Methylen-β-methyl-γ-dimethyl-γ-butyrolacton (α-MβMγγMγBL)

Vergleichsbeispiel 26:

Eine Lösung aus 1000 Teilen α-MβMγγMγBL, 2.5 Teilen Thioglykolsäure-2-ethylhexylester, 1.5 Teilen t-Dodecylmercaptan und 10 Teilen 2,2'-Azobis(isobutyronitril) wurde nach dem Kammerverfahren zwischen Glasplatten 14 Stunden bei 80 °C polymerisiert.
Das resultierende Polymer hat keine eindeutige Glasübergangstemperatur.

Beispiel 27:

Eine Lösung aus 500 Teilen α-MβMγγMγBL, 500 Teilen Methylmethacrylat, 2.5 Teilen Thioglykolsäure-2-ethylhexylester, 1.5 Teilen t-Dodecylmercaptan und 20 Teilen Dibenzoylperoxid wurde nach dem Kammerverfahren zwischen Glasplatten bei 80 °C 14 Stunden polymerisiert.
Das resultierende Polymer hat eine Glasübergangstemperatur von 177 °C.

Beispiel 28:

Eine Lösung aus 500 Teilen α-MβMγγMγBL, 500 Teilen Styrol, 2.5 Teilen Thioglykolsäure-2-ethylhexylester, 1.5 Teilen t-Dodecylmercaptan und 20 Teilen Dibenzoylperoxid wurde 14 Stunden bei 80 °C nach dem Kammerverfahren zwischen Glasplatten polymerisiert.
Das resultierende Polymer hat eine Glasübergangstemperatur von 185 °C.

4-Methylen-2-oxabicyclo-[3.3.0]octan-3-on (MOBCO)

Vergleichsbeispiel 29:

Eine Lösung aus 1000 Teilen MOBCO und 10 Teilen Dibenzoylperoxid wurde bei 80 °C 8 Stunden nach dem Kammerverfahren zwischen Glasplatten polymerisiert.
Das resultierende Polymer hat eine Glasübergangstemperatur von 200 °C und einen Gewichtsverlust von 7.2 % nach 30 min bei 300 °C.

Beispiel 30

Eine Lösung aus 500 Teilen MOBCO, 500 Teilen Methylmethacrylat und 7 Teilen 2,2'-Azobis(isobutyronitril) wurde nach dem Kammerverfahren zwischen Glasplatten bei 80 °C 5 Stunden und bei 90 °C 12 Stunden polymerisiert.
Das resultierende Polymer hat eine Glasübergangstemperatur von 149 °C und einen Gewichtsverlust von 16.2 % nach 30 min bei 300 °C.

Beispiel 31:

Eine Lösung aus 500 Teilen MOBCO, 500 Teilen Styrol, 2.5 Teilen Thioglykolsäure-2-ethylhexylester, 1.5 Teilen t-Dodecylmercaptan und 20 Teile Dibenzoylperoxid wurde 14 Stunden bei 80 °C nach dem Kammerverfahren

zwischen Glasplatten polymerisiert.
Das resultierende Polymer hat eine Glasübergangstemperatur von 197 °C.

α-Methylen-δ-valerolacton (α-MδVL)

Vergleichsbeispiel 32:

Eine Lösung aus 1000 Teilen α-MδVL und 1 Teil t-Butylper-2-ethylhexanoat wurde nach dem Kammerverfahren zwischen Glasplatten 9.5 Stunden bei 80 °C polymerisiert.
Das resultierende Polymer hat eine Glasübergangstemperatur von 186 °C und einen Gewichtsverlust von 31 % nach 30 min bei 300 °C.

Beispiel 33:

Eine Lösung aus 500 Teilen α-MδVL, 500 Teilen Methylmethacrylat, 2.5 Teilen Thioglykolsäure-2-ethylhexylester, 1.5 Teilen t-Dodecylmercaptan und 1 Teil 2,2'-Azobis(isobutyronitril) wurde 5 Stunden bei 80 °C nach dem Kammerverfahren zwischen Glasplatten polymerisiert.
Das resultierende Polymer hat eine Glasübergangstemperatur von 188 °C und einen Gewichtsverlust von 24.1 % nach 30 min bei 300 °C.

Beispiel 34:

Eine Lösung aus 650 Teilen α-MδVL, 350 Teilen Styrol und 1 Teil t-Butylper-2-ethylhexanoat wurde nach dem Kammerverfahren 8 Stunden bei 80 °C polymerisiert.
Das resultierende Polymer hat eine Glasübergangstemperatur von 199 °C und einen Gewichtsverlust von 13.6 % nach 30 min bei 300 °C.

Beispiel 35:

Eine Lösung aus 850 Teilen α-MδVL, 150 Teilen n-Butylmethacrylat und einem Teil t-Butylper-2-ethylhexanoat wurde nach dem Kammerverfahren 7 Stunden bei 80 °C polymerisiert.
Das resultierende Polymer hat eine Glasübergangstemperatur von 182 °C und einen Gewichtsverlust von 27.7 % nach 30 min bei 300 °C.

α-Methylen-γ-dimethyl-δ-valerolacton (α-MγγMδVL)

Beispiel 36:

Eine Lösung aus 500 Teilen α-MγγMδVL, 500 Teilen Styrol, 2.5 Teilen Thioglykolsäure-2-ethylhexylester, 1.5 Teilen t-Dodecylmercaptan und 20 Teilen Dibenzoylperoxid wurde nach dem Kammerverfahren 11 Stunden bei 80 °C polymerisiert.
Das resultierende Polymer hat eine Glasübergangstemperatur von 155 °C.

α-Methylen-β-methyl-δ-dimethyl-δ-valerolacton (α-MβMδδMδVL)

Vergleichsbeispiel 37:

Eine Lösung aus 1000 Teilen α-MβMδδMδVL und 10 Teilen Dibenzoylperoxid wurde nach dem Kammerverfahren 7.5 Stunden bei 80 °C polymerisiert.
Das resultierende Polymer hat eine Glasübergangstemperatur von > 300 °C.

Beispiel 38:

Eine Lösung aus 500 Teilen α-MβMδδMδVL, 500 Teilen Methylmethacrylat, 2.5 Teilen Thioglykolsäure-2-ethylhexylester, 1.5 Teilen t-Dodecylmercaptan und 9 Teilen 2,2'-Azobis(isobutyronitril) wurde nach dem Kammerverfahren 16 Stunden bei 75 °C polymerisiert.
Das resultierende Polymer hat eine Glasübergangstemperatur von 188 °C und einen Gewichtsverlust von 94 % nach 30 min bei 300 °C.

Beispiel 39:

Eine Lösung aus 500 Teilen α-MβMδδMδVL, 500 Teilen Styrol, 2.5 Teilen Thioglykolsäure-2-ethylhexylester, 1.5 Teilen t-Dodecylmercaptan und 10 Teilen Dibenzoylperoxid wurde nach dem Kammerverfahren 5 Stunden bei 80 °C polymerisiert.
Das resultierende Polymer hat eine Glasübergangstemperatur von 201 °C.

<u>α-Methylen-β-ethyl-γ-butyrolacton (α-MβEγBL)</u>

Vergleichsbeispiel 40:

Eine Lösung aus 1000 Teilen α-MβEγBL und 2 Teilen 2,2'-Azobis(isobutyronitril) wurden nach dem Kammerverfahren 4.5 Stunden bei 75 °C polymerisiert.
Das resultierende Polymer hat eine Glasübergangstemperatur über 300 °C (Zersetzung ohne Schmelzpunkt) und einen Gewichtsverlust von 16.4 % nach 30 min bei 300 °C.

Beispiel 41:

Eine Lösung aus 500 Teilen α-MβEγBL, 500 Teilen Methylmethacrylat und 2 Teilen 2,2'Azobis(isobutyronitril) wurden 4.5 Stunden bei 75 °C polymerisiert.
Das resultierende Polymer hat eine Glasübergangstemperatur von 205 °C und einen Gewichtsverlust von 21.3 % nach 30 min bei 300 °C.

Beispiel 42:

Eine Lösung aus 200 Teilen α-MβEγBL, 800 Teilen Methylmethacrylat, 2.5 Teilen Thioglykolsäure-2-ethylhexylester und einem Teil 2,2'-Azobis(isobutyronitril) wurden 6 Stunden bei 75 °C und eine Stunde bei 85 °C polymerisiert.
Das resultierende Polymer hat eine Glasübergangstemperatur von 155 °C.

<u>α-Methylen-β-methyl-γ-methyl-γ-butyrolacton (α-MβMγMγBL)</u>

Vergleichsbeispiel 43:

Eine Lösung aus 1000 Teilen α-MβMγMγBL und 5 Teilen Dibenzoylperoxid wurde 5 Stunden bei 85 °C polymerisiert.
Das resultierende Polymer hat keine eindeutige Glasübergangstemperatur und einen Gewichtsverlust von 5.0 % nach 30 min bei 300 °C.

Beispiel 44:

Eine Lösung aus 500 Teilen α-MβMγMγBL, 500 Teilen Methylmethacrylat und 5 Teilen Dibenzoylperoxid wurde 5 Stunden bei 85 °C polymerisiert.
Das resultierende Polymer hat eine Glasübergangstemperatur von 190 °C und einen Gewichtsverlust von 7.8 % nach 30 min bei 300 °C.
Die Bedingungen für die Homo- und Copolymerisation und die Charakterisierung durch Glasübergangstemperatur, Gewichtsverlust (30 min bei 300 °C) und die optische Beurteilung werden nochmals in Tabelle 1 zusammengefaßt.
Von einigen ausgewählten Polymeren wurden Vicattemperatur, E-Modul, Zugfestigkeit, Kugeldruckhärte sowie Schlagzähigkeit nach den einschlägigen DIN-Vorschriften, die z. B. weiter vorne im Text oder bei Tabelle 2 angegeben sind, gemessen. Die respektiven Ergebnisse sind in Tabelle 2 zusammengestellt.

Tabelle 1

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) TG(B) | Optik (klar/ trüb) |
|---|---|---|---|---|---|---|---|---|---|---|---|
| 1 | α-MγBγBL | 100 | t-BPEH<br>DTBP | 0.25<br>0.03 | TGEH<br>t-DDM | 0.25<br>0.15 | 60<br>90<br>140 | 240<br>60<br>60 | 146 °C | 2.6 % | klar |
| 2 | α-MγBγBL<br>MMA | 50<br>50 | t-BPEH | 0.10 | | | 80 | 480 | 120 °C | | klar |
| 2a | α-MγBγBL<br>MMA | 40<br>60 | LPO | 0.25 | TGEH<br>t-DDM | 0.35<br>0.15 | 80<br>94 | 120<br>60 | | | klar |
| 3 | α-MγBγBL<br>n-MBA | 85<br>15 | t-BPEH | 0.10 | | | 80 | 270 | 110 °C | | klar |
| 4 | α-MγMγBL | 100 | t-BPEH | 0.10 | | | 60 | 570 | 229 °C | 3.5 % | klar |
| 5 | α-MγMγBL<br>MMA | 50<br>50 | t-BPEH | 0.10 | | | 90 | 300 | 167 °C | 4.4 % | wenig trüb |
| 6 | α-MγMγBL<br>n-BA | 85<br>15 | t-BPEH | 0.10 | | | 80 | 240 | 211 °C | | wenig trüb |
| 7 | α-MγMγBL<br>n-BMA | 85<br>15 | t-BPEH | 0.10 | | | 80 | 300 | 200 °C | | klar |
| 8 | α-MγMγBL<br>Styrol | 50<br>50 | LPO | 0.10 | | | 70 | 360 | 161 °C | | klar |

Tabelle 1 Fortsetzung

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) | Optik (klar/ trüb) |
|---|---|---|---|---|---|---|---|---|---|---|---|
| 9 | α-MγHγBL | 100 | ADMV | 0.60 | | | 90<br>100 | 210<br>120 | 105 °C | | |
| 10 | α-MγHγBL<br>α-MγBL | 70<br>30 | ADMV | 0.30 | GDMA | 0.29 | 100 | 180 | 126 °C | | |
| 11 | α-MγBL | 100 | t-BPEH | 0.08 | TGEH | 0.30 | 70<br>120 | 60<br>120 | 188 °C | 0.4 | |
| 12 | α-MγBL<br>Styrol | 65<br>35 | t-BPEH | 0.18 | TGEH | 0.30 | 70<br>150 | 180<br>120 | 166 °C | 1.8 | |
| 13 | α-MγBL<br>MMA | 50<br>50 | VAZO 88 | 0.10 | TGEH | 0.20 | 85<br>115 | 240<br>60 | 135 °C | | |
| 13a | α-MγBL<br>MMA | 80<br>20 | t-BPEH | 0.08 | TGEH | 0.30 | 70<br>120 | 60<br>120 | | 1.0 | |
| 13b | α-MγBL<br>MMA | 20<br>80 | AIBN | 0.05 | TGEH | 0.35 | 75<br>120 | 210<br>180 | 133 °C | 10.8 | trüb |
| 14 | α-MγBL<br>α-MγBγBL | 50<br>50 | ADMV | 0.03 | GDMA | 0.29 | 100<br>130 | 40<br>150 | 172 °C | | |
| 15 | γ-MγBL | 100 | AIBN | 2.0 | | | 80 | 840 | 165 °C | 9.3 | klar |

Tabelle 1 Fortsetzung

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) | Optik (klar/ trüb) |
|---|---|---|---|---|---|---|---|---|---|---|---|
| 16 | α-MβMγBL | 100 | tBPEH | 0.10 | | | 80 | 300 | > 300 °C | 3.5 | klar |
| 17 | α-MβMγBL<br>MMA | 20<br>80 | AIBN<br>DTBP | 0.20<br>0.03 | TGEH<br>tDDM | 0.25<br>0.20 | 80<br>90<br>140 | 180<br>60<br>60 | 159 °C | 9.8 | klar |
| 17a | α-MβMγBL<br>MMA | 20<br>80 | LPO | 1.00 | TGEH<br>t-DDM | 0.35<br>0.15 | 80<br>94 | 120<br>60 | | | klar |
| 18 | α-MβMγBL<br>n-BMA | 50<br>50 | AIBN | 0.10 | | | 80 | 420 | 186 °C | | klar |
| 19 | α-MβBγBL | 100 | AIBN | 1.00 | | | 80 | 180 | 220 °C | 24.0 | klar |
| 20 | α-MβBγBL<br>MMA | 50<br>50 | AIBN | 0.50 | | | 80 | 180 | 162 °C | 30.5 | klar |
| 21 | α-MβBγBL<br>Styrol | 50<br>50 | AIBN | 0.3 | | | 80 | 720 | 150 °C | | klar |
| 22 | α-MββMγBL<br>Styrol | 50<br>50 | BPO | 0.50 | | | 85<br>95 | 420<br>60 | 160 °C | | klar |

Tabelle 1 Fortsetzung

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) | Optik (klar/ trüb) |
|---|---|---|---|---|---|---|---|---|---|---|---|
| 23 | α-MγγMγBL | 100 | AIBN | 0.60 | | | 80 | 360 | 211 °C | 12.1 % | klar |
| 24 | α-MγγMγBL<br>MMA | 50<br>50 | AIBN | 0.60 | TGEH<br>tDDM | 0.25<br>0.15 | 80 | 360 | 160 °C | 11.1 % | klar |
| 25 | α-MγγMγBL<br>Styrol | 50<br>50 | AIBN | 1.0 | TGEH<br>tDDM | 0.25<br>0.15 | 80 | 420 | 155 °C | | klar |
| 26 | α-MβMγγMγBL | 100 | AIBN | 1.0 | TGEH<br>tDDM | 0.25<br>0.15 | 80 | 840 | | | wenig trüb |
| 27 | α-MβMγγMγBL<br>MMA | 50<br>50 | BPO | 2.00 | TGEH<br>tDDM | 0.25<br>0.15 | 80 | 840 | 177 °C | | klar |
| 28 | α-MβMγγMγBL<br>Styrol | 50<br>50 | BPO | 2.00 | TGEH<br>tDDM | 0.25<br>0.15 | 80 | 840 | 185 °C | | klar |
| 29 | MOBCO | 100 | BPO | 1.00 | | | 80 | 480 | 200 °C | 7.2 % | klar |
| 30 | MOBCO<br>MMA | 50<br>50 | AIBN | 0.70 | | | 80<br>90 | 300<br>720 | 149 °C | 16.2 % | klar |
| 31 | MOBCO<br>Styrol | 50<br>50 | BPO | 2.00 | TGEH<br>tDDM | 0.25<br>0.15 | 80 | 840 | 197 °C | | klar |

Tabelle 1 Fortsetzung

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) | Optik (klar/ trüb) |
|---|---|---|---|---|---|---|---|---|---|---|---|
| 32 | α-MδVL | 100 | tBPEH | 0.10 | | | 80 | 570 | 186 °C | 31 % | klar |
| 33 | α-MδVL<br>MMA | 50<br>50 | AIBN | 0.10 | TGEH<br>tDDM | 0.25<br>0.15 | 80 | 300 | 188 °C | 24.1 % | trüb |
| 34 | α-MδVL<br>Styrol | 65<br>35 | tBPEH | 0.10 | | | 80 | 480 | 199 °C | 13.6 % | klar |
| 35 | α-MδVL<br>n-BMA | 85<br>15 | tBPEH | 0.10 | | | 80 | 420 | 182 °C | 27.7 | trüb |
| 36 | α-MγγMδVL<br>Styrol | 50<br>50 | BPO | 2.00 | TGEH<br>tDDM | 0.25<br>0.15 | 80 | 660 | 155 °C | | klar |
| 37 | α-MβMδδMδVL | 100 | BPO | 1.00 | | | 80 | 450 | > 300 °C | | klar |
| 38 | α-MβMδδMδVL<br>MMA | 50<br>50 | AIBN | 0.90 | TGEH<br>tDDM | 0.25<br>0.15 | 75 | 960 | 188 °C | 94 % | trüb |
| 39 | α-MβMδδMδVL<br>Styrol | 50<br>50 | BPO | 1.00 | TGEH<br>tDDM | 0.25<br>0.15 | 80 | 300 | 201 °C | | klar |

Tabelle 1 Fortsetzung

| Bsp./ Vergl.-Bsp. | Monomer | Menge Gew.% | Initiator | Menge Gew.% | Regler | Menge Gew.% | Polymerisationstemperatur °C | Polymerisationsdauer min | Glasübergangstemperatur °C | Gewichtsverlust (30min/ 300°C) | Optik (klar/ trüb) |
|---|---|---|---|---|---|---|---|---|---|---|---|
| 40 | α-MβEγBL | 100 | AIBN | 0.20 | | | 75 | 270 | > 300 °C | 16.4 % | klar |
| 41 | α-MβEγBL<br>MMA | 50<br>50 | AIBN | 0.20 | | | 75 | 270 | 205 °C | 21.3 % | klar |
| 42 | α-MβEγBL<br>MMA | 20<br>80 | AIBN | 0.10 | TGEH | 0.25 | 75<br>85 | 360<br>60 | 155 °C | | klar |
| 43 | α-MβMγMγBL | 100 | LPO | 0.50 | | | 85 | 300 | | 5.0 | klar |
| 44 | α-MβMγMγBL<br>MMA | 50<br>50 | LPO | 0.50 | | | 85 | 300 | 190 °C | 7.8 | klar |

Aus den Formmassegranulaten lassen sich durch Spritzguß Kunststofformteile herstellen, die für die Prüfung der mechanischen Daten der Homo- und Copolymere geeignet sind. Tabelle 2 gibt die an den Probekörpern gemessenen Kennwerte an.

Tabelle 2

| Beispiel/ Vergleichs- beispiel | Vicat [°C] DIN 53460 | E-Modul [N/mm²] DIN 53457 | Zugfestigk. [N/mm²] DIN 53455 | Kugeldruckh. [N/mm²] DIN ISO 2039T1 | Schlagzähigk. [kg/m²] DIN 53453 |
|---|---|---|---|---|---|
| 1 | 111 | 1800 | 17 | 99.4 2) | 4 |
| 11 | 182 | 6600 | 50 | 490 3) | 6 |
| 12 | 152 | 4100 | 53 | 320 3) | 9 |
| 13a | 162 | 6000 | 43 | 420 3) | 6 |
| 13b | 118 | / | / | / | 16 |
| 17 | 141 | 3700 1) | / | 213 3) | 16 |

1) DMTA
2) Belastung 357.9N
3) Belastung 961.0N

Vergleichsbeispiel 1: 100 % α-MγBγBL
Vergleichsbeispiel 11: 100 % α-MγBL
Beispiel 12: 65 % α-MγBL / 35 % Styrol
Beispiel 13a: 80 % α-MγBL / 20 % MMA
Beispiel 13b: 20 % α-MγBL / 80 % MMA
Beispiel 17: 20 % α-MβMγBL / 80 % MMA

Tabelle 3

| stellt nochmals die Brechungsindizes verschiedener Polymere nach DIN 53 491 zusammen. | | |
|---|---|---|
| **Beispiel/ Vergleichsbeispiel** | **Polymer** | **$n_D$ (23 °C)** |
| 1 | α-MγBγBL | 1,500 |
| 11 | α-MγBL | 1,540 |
| 13a | 20 MMA<br>80 α-MγBL | 1,532 |
| 16 | α-MβMyBL | 1,518 *) |
| 17 | 80 MMA<br>20 α-MβMγBL | 1,497 |
| - | 100 MMA (Degalan P8) | 1,492 |

*) rechnerisch bestimmt

Es fällt auf, daß der Brechungsindex der Copolymeren von MMA mit exo-Methylenlactonen höher ist als derjenige des PMMA. Dies läßt eine Verwendung der Copolymeren in Lichtwellenleitern zu, z. B. um eine möglichst hohe Differenz zwischen Kern (hoher Brechungsindex) und Schale (niedriger Brechungsindex) zu erzeugen. Ferner ist die Dämpfung des Lichts, die vor allem durch C-H-Schwingungen bewirkt wird, günstig, weil sich hier das größere C : H-Verhältnis im Lacton-Monomer im Vergleich zum MMA günstig auswirkt.

Tabelle 4

| stellt nochmals die Werte für den Gewichtsverlust (TG(A), TG(B)) von ausgewählten Polymeren zusammen: | | | | |
|---|---|---|---|---|
| **Beispiel/Vergl.-Bsp.** | **Anteil** | **Polymer/Copolymer** | **TG(A) [%]** | **TG(B) [%]** |
| - | 100 | MMA (Degalan®P8) | 0,7 | 10,1 |
| 11 | 100 | α-MγBL | 0,2 | 0,4 |
| 1 | 100 | α-MγBγBL | 0,9 | 2,6 |
| 13a | 80<br>20 | α-MγMBL<br>MMA | 0,3 | 1,0 |
| 13b | 80<br>20 | MMA<br>α-M-γBL | 0,4 | 10,8 |
| 17 | 80<br>20 | MMA<br>α-MβMγBL | 1,7 | 9,8 |
| 12 | 35<br>65 | Styrol<br>α-MγBL | 0,7 | 1,8 |

Der durch Thermogravimetrie bestimmte Gewichtsverlust ist ein Maß für die thermische Beständigkeit der untersuchten Polymeren. Je kleiner der numerische Wert für TG(A) oder TG(B), desto besser ist die thermische Beständigkeit der Probe.

Zusätzlich wurde an einigen ausgewählten Polymeren die Abriebfestigkeit untersucht.

Die Prüfung der Abriebfestigkeit erfolgte mittels Belastung auf einem Reibradprüfgerät (Taber Abraser, Modell: 503; Standard Abrasion Tester) in Anlehnung an die DIN 52 347. Als Reibrad wurde die Type CS10F eingesetzt. Das aufgelegte Prüfgewicht betrug 250 g. Nach 10 Zyklen wurden die Platten beurteilt. Als Maß für die Abriebfestigkeit wurde die Differenz des Glanzgrades vor und nach der Prüfung bei Meßwinkel von 60° herangezogen. Die Glanzmessung erfolgte mit einem multi gloss-Meßgerät Typ 4060 der mit einem multi gloss-Meßgerät Typ 4060 der Fa. Byk Gardner. Zum Vergleich wurden verschiedene handelsübliche Kunststoffe gemessen. Da Platten aus diesen verschiedenen Kunststoffen sehr unterschiedlichen Glanz haben, ist es sinnvoll, nicht die Absolutwerte sondern die Differenz des Glanzes zu vergleichen. Die Ergebnisse zeigt Tabelle 5:

| Kunststoff | Beispiel | Glanz (vorher) | Glanz (nachher) | Differenz |
|---|---|---|---|---|
| MMA/αMβMγBL 80/20 | 17 | 124 | 88 | 36 |
| PMMA Deglas® | - | 131 | 88 | 43 |
| Polycarbonat Decarglas® | - | 150 | 101 | 49 |
| Poly-αMγBγBL | 1 | 125 | 48 | 77 |

Außerdem wurde an einigen Copolymeren zusätzlich die Kratzfestigkeit durch Bestimmung der Ritzhärte sowie der Oberflächenhärte untersucht.

Die Prüfung der Ritzhärte erfolgte mit einem Universal Scratch Tester 413 nach DIN 53 799 - Teil 10. Die Meßwerte sind in Tabelle 6 wiedergegeben; die angegebenen Werte geben die Kraft an, die für eine Schädigung der Platte erforderlich ist. Je höher der Wert, desto härter ist die Platte.

Zur Charakterisierung der Oberflächenhärte fand die sogenannte "Schmißprüfung" nach Oesterle Anwendung. Hierbei kann die Substratoberfläche auf Verkratzen mit einer Duroplastprüfscheibe untersucht werden. Dabei wurde gefunden, daß MMA- / α-M-β-M-γ-BL-Copolymere mit einem 80/20-Verhältnis ebenso kratzfest wie PMMA (Degalan P8) sind. Die Meßwerte sind in Tabelle 7 angegeben.

Tabelle 6

| Meßwerte für die Kratzfestigkeit von MMA- / α-M-β-M-γ-BL-Copolymeren mit einem 80/20-Verhältnis im Vergleich mit PMMA und PC<br>Ritzhärteprüfung nach DIN 53 799 - Teil 10: | |
|---|---|
| **Probe** | **Meßwert [N]** |
| Polycarbonat (Decarglas®) | 0,1 |
| PMMA (Degalan P8) | 0,85 |
| MMA-/α-M-β-M-γ-BL-Copolymer | 0,8 |

Der Wert gibt die Kraft an, bei der eine sichtbare Kratzspur entsteht.

Tabelle 7

| Schmißhärteprüfung nach Oesterle mit dem Schmißhärteprüfer Modell 435 der Fa. Erichsen und Duroplastprüfwerkzeug: | |
|---|---|
| **Probe** | **Meßwert [N]** |
| Polycarbonat (Decarglas®) | < 0,5 |
| PMMA (Degalan P8) | 2,7 |
| MMA-/α-M-β-M-γ-BL-Copolymer | 2,5 |

**Patentansprüche**

1. Copolymer zur Herstellung von Gußglas oder für Formmassen zur Herstellung von Formkörpern jeweils mit erhöhter Wärmeformbeständigkeit, erhältlich durch Co-Polymerisation von

   A) wenigstens einem exo-Methylen Lacton der allgemeinen Formel I

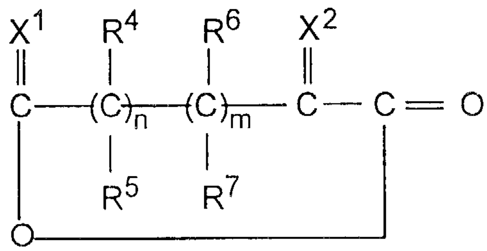

(I)

worin

n = 0 oder 1,
m = 0 oder 1 und die Summe n + m entweder 1 oder 2 ist; $X^1$ und $X^2$ jeweils für =CH-$R^1$ oder zwei einfach gebundene Substituenten $R^2$ und $R^3$ stehen,

wobei genau einer der Reste $X^1$ oder $X^2$ =CH-$R^1$sein muß, und für den Fall, daß $X^1$ =CH-$R^1$ ist, die Summe von n + m 1 sein muß,
wobei
$R^1$, $R^2$, $R^3$, $R^4$, $R^5$, $R^6$ und $R^7$ unabhängig voneinander gleich oder verschieden H, $C_1$-$C_7$-Alkyl und Halogen sein können, wobei die $C_1$-$C_7$-Alkylreste verzweigt oder linear, N, P, S heteroatomsubstituiert, O-Alkyl substituiert sein können, Halogensubstitution und/oder Carbonylgruppen tragen können,
und
wobei zwei der Reste $R^1$ bis $R^7$ zu einem Ring mit 5 oder 6 Ringgliedern verbunden sein können;
mit
B) wenigstens einem vinylisch ungesättigten Monomeren oder einem oder mehreren exo-Methylen Lactonen der allgemeinen Formel I, von denen wenigstens eines von dem oder den unter A) eingesetzten exo-Methylen Lactonen der allgemeinen Formel I verschieden ist, wobei Copolymere aus α-Methylen-γ-butyrolacton mit Acrylnitril, Styrol, Methylmethacrylat oder bifunktionellen Methacrylaten sowie aus α-Methylen-δ-valerolacton und Styrol ausgenommen sind.

**2.** Copolymer nach Anspruch 1,
**dadurch gekennzeichnet,**
daß zu seinem Erhalt als Komponente A) wenigstens ein α-Methylen-γ-butyrolacton der allgemeinen Formel II

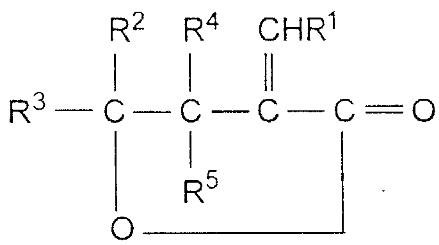

(II)

eingesetzt wird,
worin

$R^1$ = H oder $CH_3$, bevorzugt H, ist und
$R^2$, $R^3$, $R^4$ und $R^5$ die bei Formel I angegebene Bedeutung besitzen und insbesondere auch $R^2$ oder $R^3$ mit $R^4$ oder $R^5$ insgesamt einen 5- oder 6-gliedrigen Ring ausbilden können.

**3.** Copolymer nach Anspruch 2,
**dadurch gekennzeichnet,**
daß $R^4$ und/oder $R^5$ beim α-Methylen-γ-butyrolacton der allgemeinen Formel II $C_1$-$C_7$-Alkyl sind.

**4.** Copolymer nach Anspruch 3,
**dadurch gekennzeichnet,**

daß $R^4$ oder $R^5$ beim α-Methylen-γ-butyrolacton der allgemeinen Formel II Methyl, Ethyl, n-Propyl, i-Propyl, n-Butyl, iso-Butyl, tert-Butyl, n-Pentyl, neo-Pentyl, Hexyl oder Heptyl sind.

**5.** Copolymer nach einem der Ansprüche 2 - 4,
**dadurch gekennzeichnet,**
daß $R^2$ und/oder $R^3$ beim α-Methylen-γ-butyrolacton der allgemeinen Formel II H, Methyl oder Ethyl sind.

**6.** Copolymer nach einem der Ansprüche 2 bis 5,
**dadurch gekennzeichnet,**
daß als Verbindung der allgemeinen Formel II

α-Methylen-β-methyl-γ-butyrolacton,
α-Methylen-β-ethyl-γ-butyrolacton,
α-Methylen-β-n-butyl-γ-butyrolacton,
α-Methylen-β-methyl-γ-methyl-γ-butyrolacton oder
α-Methylen-β-methyl-γγ-dimethyl-γ-butyrolacton eingesetzt wird.

**7.** Copolymer nach Anspruch 2,
**dadurch gekennzeichnet,**
daß als Verbindung der allgemeinen Formel II 4-Methylen-2-oxa-bicyclo-[3.3.0]-octan-3-on eingesetzt wird.

**8.** Copolymer nach Anspruch 1,
**dadurch gekennzeichnet,**
daß zu seinem Erhalt als Komponente A) wenigstens ein γ-Methylen-γ-butyrolacton der allgemeinen Formel III

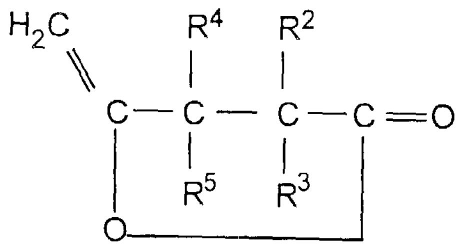

(III)

eingesetzt wird,
worin
$R^2$, $R^3$, $R^4$ und $R^5$ die bei Formel I angegebene Bedeutung besitzen.

**9.** Copolymer nach Anspruch 1,
**dadurch gekennzeichnet,**
daß zu seinem Erhalt als Komponente A) wenigstens ein α-Methylen-δ-valerolacton der allgemeinen Formel IV

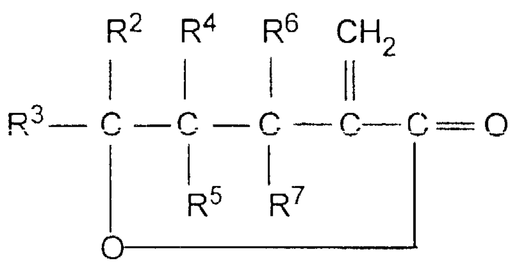

(IV)

eingesetzt wird,
worin
$R^2$, $R^3$, $R^4$ und $R^5$ die bei Formel I angegebene Bedeutung besitzen.

**10.** Copolymer nach einem der Ansprüche 1 bis 9,

**dadurch gekennzeichnet,**
daß zu seinem Erhalt als Komponente B) Methylmethacrylat, n-Butylmethacrylat, Methylacrylat, Ethylacrylat, n-Butylacrylat und/oder Styrol eingesetzt wird.

**11.** Copolymer nach einem der Ansprüche 1 bis 7,
**dadurch gekennzeichnet,**
daß zu seinem Erhalt als Komponente B) Methylmethacrylat, n-Butylmethacrylat oder Styrol eingesetzt wird.

**12.** Copolymer nach einem der vorhergehenden Ansprüche,
**gekennzeichnet durch**
einen Gehalt an exo-Methylen-Lacton der Formel I von 1 - 70 Gew.% bezogen auf die Gesamtsumme des Copolymeren.

**13.** Copolymer nach Anspruch 12,
**gekennzeichnet durch**
einen Gehalt an exo-Methylen-Lacton der Formel I von 5 - 50 Gew.%, bevorzugt 10 - 30 Gew.%, bezogen auf die Gesamtsumme des Copolymeren.

**14.** Copolymer nach einem der vorhergehenden Ansprüche,
**dadurch gekennzeichnet,**
daß die Komponente B) Methylmethacrylat ist, der Gehalt an Methylmethacrylat 50 Gew.-% oder größer ist, die Glasübergangstemperatur des erhaltenen Copolymers größer als 120 °C ist und das Copolymer transparent und klar ist.

**15.** Wärmeformbeständige Gußglaskörper erhalten nach dem Kammerofenverfahren durch Substanzpolymerisation eines Sirups aufweisend

A) wenigstens einem exo-Methylen Lacton der allgemeinen Formel I

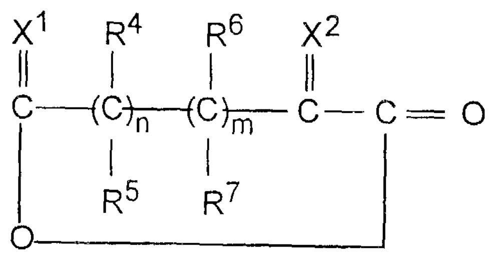

(I)

worin

n = 0 oder 1,
m = 0 oder 1 und die Summe n + m entweder 1 oder 2 ist; $X^1$ und $X^2$ jeweils für $=CH-R^1$ oder zwei einfach gebundene Substituenten $R^2$ und $R^3$ stehen,

wobei genau einer der Reste $X^1$ oder $X^2$ $=CH-R^1$sein muß, und für den Fall, daß $X^1$ $=CH-R^1$ ist, die Summe von n + m 1 sein muß,
wobei
$R^1$, $R^2$, $R^3$, $R^4$, $R^5$, $R^6$ und $R^7$ unabhängig voneinander gleich oder verschieden H, $C_1$-$C_7$-Alkyl und Halogen sein können, wobei die $C_1$-$C_7$-Alkylreste verzweigt oder linear, N, P, S heteroatomsubstituiert, O-Alkyl substituiert sein können, Halogensubstitution und/oder Carbonylgruppen tragen können,
und
wobei zwei der Reste $R^1$ bis $R^7$ zu einem Ring mit 5 oder 6 Ringgliedern verbunden sein können;
mit
B) wenigstens einem vinylisch ungesättigten Monomeren oder einem oder mehreren exo-Methylen Lactonen der allgemeinen Formel I, von denen wenigstens eines von dem oder den unter A) eingesetzten exo-Methylen Lactonen der allgemeinen Formel I verschieden ist.

**16.** Gußglaskörper gemäß Anspruch 15,
**gekennzeichnet durch**
ein mittleres Molekulargewicht $\overline{M}_w$ des Copolymerisats aus den Komponenten A) und B) von 500.000 - 5.000.000, bevorzugt 1.000.000 - 3.000.000.

**17.** Copolymer nach einem der Ansprüche 1 bis 14,
**gekennzeichnet durch**
ein mittleres Molekulargewicht $\overline{M}_w$ zwischen 50.000 und 250.000.

**18.** Verwendung des Copolymeren gemäß Anspruch 17 in Formmassen zur Herstellung von Formkörpern im Extrudier- oder Spritzgußverfahren.

**19.** Wärmeformbeständiger Formkörper enthaltend ein Copolymer gemäß einem der Ansprüche 1 bis 14 sowie 17.

**Claims**

**1.** Copolymer for the production of cast sheet or for moulding compositions for the production of mouldings, each having elevated heat resistance, obtainable by copolymerising

A) at least one exo-methylene lactone of the general formula I

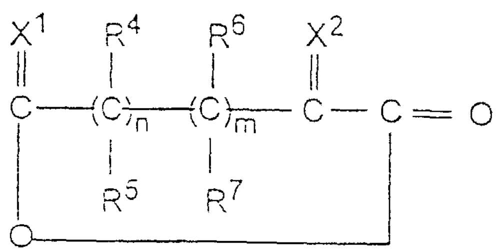

(I)

in which

n = 0 or 1,
m = 0 or 1 and the sum of n + m is either 1 or 2;
$X^1$ and $X^2$ each denote =CH-$R^1$ or two substituents $R^2$ and $R^3$ attached by single bonds,

wherein exactly one of the residues $X^1$ or $X^2$ must be =CH-$R^1$, and in the event that $X^1$ is =CH-$R^1$, the sum of n + m muse be 1,
wherein
$R^1$, $R^2$, $R^3$, $R^4$, $R^5$, $R^6$ and $R^7$ may mutually independently be identically or differently H, $C_1$-$C_7$ alkyl and halogen, wherein the $C_1$-$C_7$ alkyl residues may be branched or linear, substituted by N, P, S heteroatoms, substituted by O-alkyl, may bear halogen substitution and/or carbonyl groups,
and
wherein two of the residues $R^1$ to $R^7$ may be joined together into a ring having 5 or 6 ring members; with
B) at least one vinylically unsaturated monomer or one or more exo-methylene lactones of the general formula I, at least one of which differs from the exo-methylene lactone(s) of the general formula I used in A), wherein copolymers prepared from α-methylene-γ-butyrolactone with acrylonitrile, styrene, methyl methacrylate or bifunctional methacrylates and from α-methylene-δ-valerolactone and styrene are excluded.

**2.** Copolymer according to claim 1,
characterised in that
at least one α-methylene-γ-butyrolactone of the general formula II

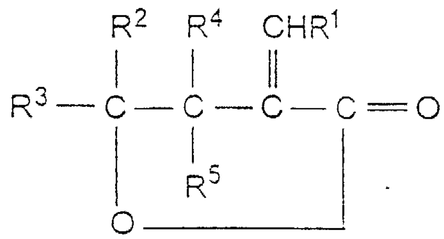

(II)

is used as component A) to obtain the copolymer, in which

$R^1$ = H or $CH_3$, preferably H, and
$R^2$, $R^3$, $R^4$ and $R^5$ have the meaning stated in formula I and in particular $R^2$ or $R^3$ may also form with $R^4$ or $R^5$ a ring having a total of 5 or 6 members.

**3.** Copolymer according to claim 2,
characterised in that
$R^4$ and/or $R^5$ in the α-methylene-γ-butyrolactone of the general formula II are $C_1$-$C_7$ alkyl.

**4.** Copolymer according to claim 3,
characterised in that $R^4$ or $R^5$ in the α-methylene-γ-butyrolactone of the general formula II is methyl, ethyl, n-propyl, i-propyl, n-butyl, iso-butyl, tert-butyl, n-pentyl, neopentyl, hexyl or heptyl.

**5.** Copolymer according to one of claims 2-4,
characterised in that
$R^2$ and/or $R^3$ in the α-methylene-γ-butyrolactone of the general formula II are H, methyl or ethyl.

**6.** Copolymer according to one of claims 2 to 5,
characterised in that

α-methylene-β-methyl-γ-butyrolactone,
α-methylene-β-ethyl-γ-butyrolactone,
α-methylene-β-n-butyl-γ-butyrolactone,
α-methylene-β-methyl-γ-methyl-γ-butyrolactone, or
α-methylene-β-methyl-γγ-dimethyl-γ-butyrolactone, is used as the compound of the general formula II.

**7.** Copolymer according to claim 2,
characterised in that
4-methylene-2-oxabicyclo[3.3.0]octan-3-one is used as the compound of the general formula II.

**8.** Copolymer according to claim 1,
characterised in that
at least one γ-methylene-γ-butyrolactone of the general formula III

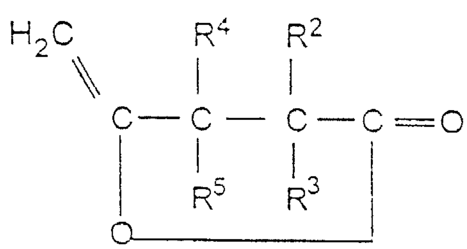

(III)

is used as component A) to obtain the copolymer, in which
$R^2$, $R^3$, $R^4$ and $R^5$ have the meaning stated in formula I.

**9.** Copolymer according to claim 1, characterised in that at least one α-methylene-δ-valerolactone of the general formula IV

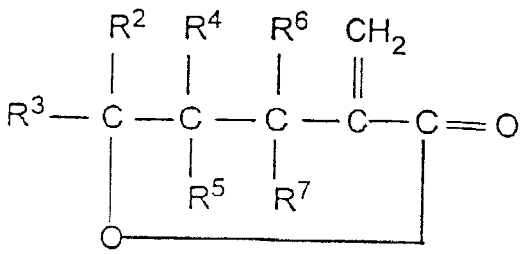

(IV)

is used as component A) to obtain the copolymer, in which $R^2$, $R^3$, $R^4$ and $R^5$ have the meaning stated in formula I.

**10.** Copolymer according to one of claims 1 to 9, characterised in that methyl methacrylate, n-butyl methacrylate, methyl acrylate, ethyl acrylate, n-butyl acrylate and/or styrene are used as component B) to obtain the copolymer.

**11.** Copolymer according to one of claims 1 to 7, characterised in that methyl methacrylate, n-butyl methacrylate or styrene is used as component B) to obtain the copolymer.

**12.** Copolymer according to one of the preceding claims, characterised by a content of exo-methylene lactone of the formula I of 1-70 wt.%, relative to the total copolymer.

**13.** Copolymer according to claim 12, characterised by a content of exo-methylene lactone of the formula I of 5-50 wt.%, preferably of 10-30 wt.%, relative to the total copolymer.

**14.** Copolymer according to one of the preceding claims, characterised in that component B) is methyl methacrylate, the content of methyl methacrylate is 50 wt.% or above, the glass transition temperature of the resultant copolymer is greater than 120°C and the copolymer is transparent and clear.

**15.** Heat resistant cast sheets obtained using the cell casting/oven process by bulk polymerisation of a syrup comprising

A) at least one exo-methylene lactone of the general formula I

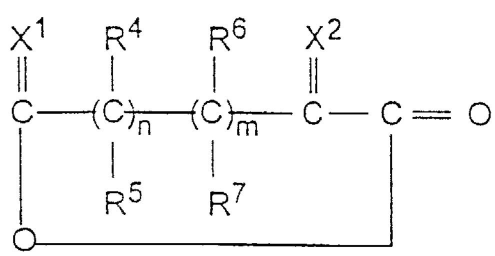

(I)

in which

n = 0 or 1,
m = 0 or 1 and the sum of n + m is either 1 or 2; $X^1$ and $X^2$ each denote =CH-$R^1$ or two substituents $R^2$ and $R^3$ attached by single bonds,

wherein exactly one of the residues $X^1$ or $X^2$ must be =CH-$R^1$, and in the event that $X^1$ is =CH-$R^1$, the sum of n + m must be 1,
wherein
$R^1$, $R^2$, $R^3$, $R^4$, $R^5$, $R^6$ and $R^7$ may mutually independently be identically or differently H, $C_1$-$C_7$ alkyl and halogen, wherein the $C_1$-$C_7$ alkyl residues may be branched or linear, substituted by N, P, S heteroatoms, substituted by O-alkyl, may bear halogen substitution and/or carbonyl groups,
and
wherein two of the residues $R^1$ to $R^7$ may be joined together into a ring having 5 or 6 ring members; with
B) at least one vinylically unsaturated monomer or one or more exo-methylene lactones of the general formula I, at least one of which differs from the exo-methylene lactone(s) of the general formula I used in A).

**16.** Cast sheets according to claim 15,
characterised by
an average molecular weight $\overline{M}_w$ of the copolymer prepared from components A) and B) of 500000-5000000, preferably of 1000000-3000000.

**17.** Copolymer according to one of claims 1 to 14,
characterised by
an average molecular weight $\overline{M}_w$ of between 50000 and 250000.

**18.** Use of the copolymer according to claim 17 in moulding compositions for the production of mouldings using extrusion or injection moulding processes.

**19.** Heat resistant mouldings containing a copolymer according to one of claims 1 to 14 and 17.

## Revendications

**1.** Copolymère pour la fabrication de verres coulés ou de matériaux de moulage pour la fabrication d'objets moulés, respectivement, de grande stabilité dimensionnelle à la chaleur, que l'on peut obtenir en copolymérisant :

A) au moins une exo-méthylène lactone de formule générale I :

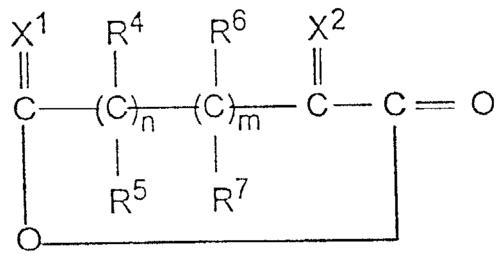

(I)

dans laquelle :

n est égal à 0 ou à 1,
m est égal à 0 ou à 1 et la somme n + m est égale à 1 ou à 2,
$X^1$ et $X^2$ désignent respectivement =CH-$R^1$ ou deux substituants $R^2$ et $R^3$ à liaison simple,

où exactement un des radicaux $X^1$ ou $X^2$ doit être =CH-$R^1$ et, dans le cas où $X^1$ est =CH-$R^1$, la somme n + m doit être égale à 1,
où $R^1$, $R^2$, $R^3$, $R^4$, $R^5$, $R^6$ et $R^7$ peuvent être, indépendamment l'un de l'autre, égaux ou différents et représenter H, un groupe alkyle en $C_1$-$C_7$ et un halogène, les radicaux alkyle en $C_1$-$C_7$ pouvant être ramifiés ou linéaires,

substitués par des hétéro-atomes N, P, S ou un groupe O-alkyle et pouvant porter un substituant d'halogène et/ou des groupes carboxyle, et
où deux des radicaux $R^1$ à $R^7$ peuvent être liés pour former un noyau à 5 ou 6 chaînons ;
avec
B) au moins un monomère à insaturation vinylique ou une ou plusieurs exo-méthylène lactones de formule générale I dont au moins l'une est différente de la ou des exo-méthylène lactones de formule générale I utilisée (s) sous A), formule dont sont exclus les copolymères d'α-méthylène-γ-butyrolactone avec de l'acrylonitrile, du styrène, du méthacrylate de méthyle ou des méthacrylates bifonctionnels ou d'α-méthylène-δ-valérolactone et de styrène.

**2.** Copolymère selon la revendication 1, caractérisé en ce qu'on utilise pour son obtention comme composant A) au moins une α-méthylène-γ-butyrolactone de formule générale II :

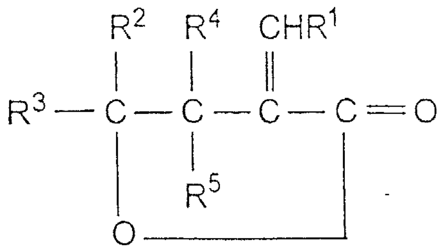

(II)

dans laquelle :

$R^1$ est H ou $CH_3$, de préférence H, et
$R^2$, $R^3$, $R^4$ et $R^5$ ont la signification indiquée dans la formule I et, en particulier, $R^2$ ou $R^3$ peut également former, conjointement avec $R^4$ ou $R^5$, un noyau à 5 ou 6 chaînons.

**3.** Copolymère selon la revendication 2, caractérisé en ce que $R^4$ et/ou $R^5$, dans l'α-méthylène-γ-butyrolactone de formule générale II, sont des groupes alkyle en $C_1$-$C_7$.

**4.** Copolymère selon la revendication 3, caractérisé en ce que $R^4$ ou $R^5$, dans l'α-méthylène-γ-butyrolactone de formule générale II, désigne des groupes méthyle, éthyle, n-propyle, i-propyle, n-butyle, iso-butyle, tert-butyle, n-pentyle, néo-pentyle, hexyle ou heptyle.

**5.** Copolymère selon l'une quelconque des revendications 2 à 4, caractérisé en ce que $R^2$ et/ou $R^3$, dans l'α-méthylène-γ-butyrolactone de formule générale II désignent H, un groupe méthyle ou éthyle.

**6.** Copolymère selon l'une quelconque des revendications 2 à 5, caractérisé en ce qu'on utilise comme composé de formule II :

l'α-méthylène-β-méthyl-γ-butyrolactone,
l'α-méthylène-β-éthyl-γ-butyrolactone,
l'α-méthylène-β-n-butyl-γ-butyrolactone,
l'α-méthylène-β-iméthyl-γ-méthyl-γ-butyrolactone ou
l'α-méthylène-β-méthyl-γγ-diméthyl-γ-butyrolactone.

**7.** Copolymère selon la revendication 2, caractérisé en ce qu'on utilise comme composé de formule II la 4-méthylène-2-oxa-bicyclo-[3.3.0]-octan-3-one.

**8.** Copolymère selon la revendication 1, caractérisé en ce qu'on utilise pour son obtention comme composant A) au moins une γ-méthylène-γ-butyrolactone de formule générale III :

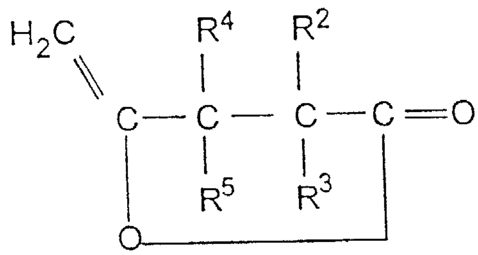

(III)

dans laquelle :
$R^2$, $R^3$, $R^4$ et $R^5$ ont la signification indiquée dans la formule I.

9. Copolymère selon la revendication 1, caractérisé en ce qu'on utilise pour son obtention comme composant A) au moins une α-méthylène-δ-valérolactone de formule générale IV :

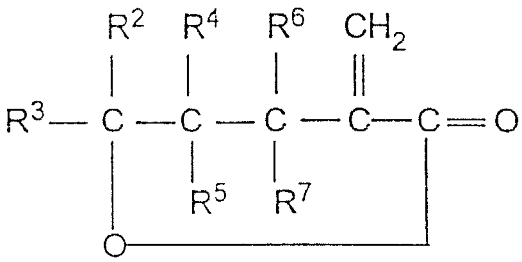

(IV)

dans laquelle $R^2$, $R^3$, $R^4$ et $R^5$ ont la signification indiquée dans la formule I.

10. Copolymère selon l'une quelconque des revendications 1 à 9, caractérisé en ce qu'on utilise pour son obtention comme composant B) du méthacylate de méthyle, du méthacrylate de n-butyle, de l'acrylate de méthyle, de l'acrylate d'éthyle, de l'acrylate de n-butyle et/ou du styrène.

11. Copolymère selon l'une quelconque des revendications 1 à 7, caractérisé en ce qu'on utilise pour son obtention comme composant B) du méthacrylate de méthyle, du méthacrylate de n-butyle ou du styrène.

12. Copolymère selon l'une quelconque des revendications précédentes, caractérisé par une teneur en exo-méthylène lactone de formule I de 1 à 70% en poids par rapport à la quantité totale du copolymère.

13. Copolymère selon la revendication 12, caractérisé par une teneur en exo-méthylène lactone de formule I de 5 à 50% en poids, de préférence de 10 à 30% en poids par rapport à la quantité totale du copolymère.

14. Copolymère selon l'une quelconque des revendications précédentes, caractérisé en ce que le composant B) est du méthacrylate de méthyle, la teneur en méthacrylate de méthyle est de 50% en poids ou plus, la température de transition vitreuse du copolymère obtenu est supérieure à 120°C et le copolymère est transparent et clair.

15. Objet de verre coulé dimensionnellement stable à la chaleur obtenu par le procédé au four à cornue par polymérisation sensible d'un sirop présentant :

A) au moins une exo-méthylène lactone de formule générale I :

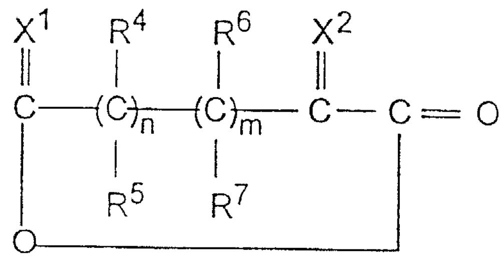

(I)

dans laquelle :

n est égal à 0 ou à 1,
m est égal à 0 ou à 1 et la somme n + m est égale à 1 ou à 2,
$X^1$ et $X^2$ désignent respectivement =CH-$R^1$ ou deux substituants $R^2$ et $R^3$ à liaison simple,

où exactement un des radicaux $X^1$ ou $X^2$ doit être =CH-$R^1$ et, dans le cas où $X^1$ est =CH-$R^1$, la somme n + m doit être égale à 1,
où $R^1$, $R^2$, $R^3$, $R^4$, $R^5$, $R^6$ et $R^7$ peuvent être, indépendamment l'un de l'autre, égaux ou différents et représenter H, un groupe alkyle en $C_1$-$C_7$ et un halogène, les radicaux alkyle en $C_1$-$C_7$ pouvant être ramifiés ou linéaires, substitués par des hétéro-atomes N, P, S ou un groupe O-alkyle et pouvant porter un substituant d'halogène et/ou des groupes carboxyle, et
où deux des radicaux $R^1$ à $R^7$ peuvent être liés pour former un noyau à 5 ou 6 chaînons ;
avec
B) au moins un monomère à insaturation vinylique ou une ou plusieurs exo-méthylène lactones de formule générale I dont au moins l'une est différente de la ou des exo-méthylène lactones de formule générale I utilisée (s) sous A).

**16.** Objet de verre coulé selon la revendication 15, caractérisé par un poids moléculaire moyen Mp du copolymérisat des composants A) et B) de 500 000 à 5 000 000, de préférence de 1 000 000 à 3 000 000.

**17.** Copolymère selon l'une quelconque des revendications 1 à 14, caractérisé par un poids moléculaire moyen $M_P$ entre 50 000 et 250 000.

**18.** Utilisation du copolymère selon la revendication 17 dans des matériaux de moulage d'objets moulés par un procédé d'extrusion ou de coulée par injection.

**19.** Objet moulé dimensionnellement stable à la chaleur contenant un copolymère selon l'une quelconque des revendications 1 à 14 et 17.